# EUROPÄISCHE PATENTSCHRIFT

(11) **EP 1 035 934 B1**
(45) Veröffentlichungstag und Bekanntmachung des Hinweises auf die Patenterteilung: **11.09.2002**
(21) Anmeldenummer: 98962412.7
(22) Anmeldetag: 03.12.1998
(51) Int. Cl.: B23B 29/04, B23B 31/107

(54) **SPANNSYSTEM ZUR LÖSBAREN VERBINDUNG ZWEIER TEILE**
CLAMPING SYSTEM FOR DETACHABLY ASSEMBLING TWO PIECES
SYSTEME DE SERRAGE POUR ASSEMBLAGE AMOVIBLE DE DEUX PIECES

(30) Priorität: 03.12.1997 DE 19753663
(43) Veröffentlichungstag der Anmeldung: 20.09.2000
(73) Patentinhaber: Gühring, Jörg, Dr., 72458 Albstadt (DE)
(72) Erfinder: KLEINER, Gilbert, D-72514 Inzigkofen (DE)
(74) Vertreter: Winter, Konrad Theodor, Dipl.-Ing.
(86) Internationale Anmeldenummer: EP9807882
(87) Internationale Veröffentlichungsnummer: WO99028071

(56) Entgegenhaltungen:
- WO-A-95/16533
- DE-A- 4 220 873
- DE-U- 9 212 205

## Beschreibung

### Technisches Gebiet

Die vorliegende Erfindung bezieht sich auf ein Spannsystem zur lösbaren Verbindung zweier Teile, gemäß dem Oberbegriff des Patentanspruchs 1. Ein derartiges System findet beispielsweise für die Kupplung eines Werkstück- oder Werkzeugträgers, beispielsweise in Form einer Werkzeug-Grundaufnahme, und einer Handhabungseinrichtung, wie z. B. einer Spindel einer Werkzeugmaschine, oder für Werkzeugsystemmodule untereinander Verwendung.

### Stand der Technik

Bei derartigen Spannsystemen kommt es darauf an, die zu verbindenden Teile zuverlässig und fest aneinander zu klammern, wobei über einen Passungsflächeneingriff zwischen einem Hohlschaft des einen Teils und einem Aufnahmeabschnitt des anderen Teils eine exakte Lagefixierung der zu verbindenden Teile zueinander sichergestellt wird. Das Spannen bzw. Aneinanderklammern der beiden zu verbindenden Teile erfolgt, indem der Hohlschaft beim Anlegen von Spannkörpern einer Spanneinrichtung gegen eine im Hohlschaft ausgebildete hinterschnittene Spannschulter in den Aufnahmeabschnitt gezogen wird. Dabei wird zwischen Planflächen der zu verbindenden Teile eine Anpreßkraft erzeugt, so daß die beiden aneinandergeklammerten Teile durch die feste Verbindung zwischen den Passungsflächen eine exakte axiale wie auch radiale Lagefixierzung erhalten.

In jüngerer Zeit hat sich zunehmend das sogenannte Hohlschaft-Spannsystem durchgesetzt, bei dem der Hohlschaft entweder zylindrisch oder konisch ausgeführt ist. Im zusammengefügten Zustand der beiden zu verbindenden Teile können die zur Anklammerung der Teile aneinander dienenden Spannkörper nicht nur dafür sorgen, daß eine ausreichende axiale Anpreßkraft erzeugt wird, sondern auch dafür, daß der Hohlschaft eine gewisse radiale Aufweitung erfährt, wodurch die Passungsgenauigkeit zwischen Hohlschaft und Aufnahmeabschnitt zusätzlich verbessert wird.

Bei herkömmlichen Spannsystemen nach dem vorstehend beschriebenen Prinzip stellt die Montage und Demontage der Spanneinrichtung in den dafür vorgesehenen Aufnahmeabschnitt jedoch eine besondere Problematik dar, da das Spannsystem neben einer genauen axialen und radialen Lagefixierung der beiden zu verbindenden Teile auch die Reaktionskräfte der Spannkraft aufnehmen muß.

Aus der Druckschrift DE-A-4220873 ist ein Spannsystem zur lösbaren Verbindung zweier vorzugsweise rotationssymmetrischer Teile bekannt, von denen ein Teil einen vorzugsweise zylindrischen oder konischen Hohlschaft und das andere Teil einen entsprechenden Aufnahmeabschnitt zur passungsgenauen Aufnahme des Hohlschafts aufweist. Es ist eine konzentrisch im Aufnahmeabschnitt angeordnete Spanneinrichtung vorgesehen, die sich im aneinandergefügten Zustand der beiden Teile in den Hohlschaft des einen Teils erstreckt und zumindest zwei gegensinnig bewegbare Spannkörper sowie einen die Spannkörper antreibende Betätigungseinrichtung aufweist, durch welche die Spannkörper synchron in und außer Eingriff mit einer hinterschnittenen Spannschulter des Hohlschafts bewegbar sind, wodurch zwischen Planflächen der beiden zu verbindenden Teile eine Anpreßkraft erzeugt wird.

Dieses Spannsystem beruht auf dem vorstehend beschriebenen Prinzip der Anklammerung zweier zu verbindender Teile durch eine Spanneinrichtung mit Spannkörpern. Bei diesem Spannsystem wird die vorstehend erwähnte Problematik einer genauen Lagefixierung der zu verbindenden Teile dadurch gelöst, daß ein von den Spannkörpern bezüglich der Montage entkoppelter Trägerkörper formschlüssig im Aufnahmeabschnitt fixiert wird. Der lagefixierte Trägerkörper bewirkt eine Abstützung der Spannkörper und nimmt somit indirekt die Reaktionskräfte der Spannkraft auf. Die indirekte Aufnahme der Reaktionskraft über den Trägerkörper sowie dessen Befestigung und Lagefixierung kann jedoch nur durch zusätzliche Fixier- und Befestigungselemente realisiert werden. Darüber hinaus sind im allgemeinen besonere Montagevorrichtungen erforderlich.

Bei einem anderen bekannten Spannsystem, wie es beispielsweise in der Druckschrift DE-C2-3807140 beschrieben ist, müssen mehrere lose angeordnete oder zumindest nicht eindeutig fixierte Spannelemente formschlüssig im Aufnahmeabschnitt eingehängt werden. In diesem Fall entfällt zwar ein zusätzlicher Trägerkörper, die direkte Einhängung der Spannelemente ist jedoch mit einem erheblichen Montageaufwand verbunden, da die einzeln angeordneten Spannelemente in der Montagestellung nicht eindeutig fixiert sind. Demzufolge müssen die Spannelemente bei der Montage/Demontage in eine spezielle Montage/Demontagestellung gebracht werden. Hierzu sind ebenfalls zusätzliche Bauteile und Montagevorrichtungen notwendig.

Aus dem Dokument DE-U1-29518660 ist ein Spannsystem gemäß dem Oberbegriff des Patentanspruchs 1 bekannt.

Zur Fixierung der Spannelementhälften in der Werkzeugspindel sind eine Gewindehülse, ein Spannring sowie mehrere segmentförmig ausgebildete Stützelemente erforderlich. Die Kopfteile der Spannelementhälften stützen sich somit über ein aus dem Spannring und den Stützelementen gebildetes "Getriebe" an der hinterschnittenen Spannschulter des Werkzeugdorns ab.

Aufgabe der vorliegenden Erfindung ist es daher, ein *Spannsystem* für zwei zu verbindende Teile, beispielsweise ein Werkzeugsystemmodul und eine Werkzeugmaschinenspindel, zu schaffen, das einerseits mit einem Minimum an Bauteilen auskommt und andererseits eine einfache, zuverlässige und formstabile Kupplung der beiden zu verbindenden Teile ermöglicht, ohne daß zusätzliche Montage- oder Befestigungsvorrichtungen erforderlich sind.

Diese Aufgabe wird durch ein Spannsystem mit den Merkmalen des Patentanspruchs 1 gelöst.

Erfindungsgemäß sind die Spannelemente in einem Bereich zwischen Kopf- und Fußabschnitt jeweils mit einem Halteabschnitt versehen, die mit einer hinterschnittenen Ausnehmung des Aufnahmeabschnitts in Eingriff bringbar sind.

Es sind damit nach wie vor die Spannkörper als Kopfabschnitte von länglichen, im wesentlichen parallel zur Längs- bzw. Drehachse des Aufnahmeabschnitts angeordneten Spannelementen ausgeführt. Die Spannelemente sind Bestandteile der Spanneinrichtung. Die Fußabschnitte der Spannelemente sind erfindungsgemäß miteinander verbunden, so daß die Spanneinrichtung im wesentlichen die Form einer V- bzw. U-förmigen Spannzange bzw. Spanngabel hat.

Die Spannelemente können dabei beweglich, form- und kraftschlüssig oder einstückig miteinander verbunden sein. Mittels der Betätigungseinrichtung kann eine gegensinnige Bewegung der Spannkörper, d. h. eine Annäherung oder Auseinanderbewegung der Spannkörper, bewirkt werden. Durch das erfindungsgemäße Spannsystem mit einer derartigen vorgegebenen Anordnung der Spannelemente zueinander entfällt somit der bei herkömmlichen Spannsystemen erforderliche Trägerkörper für die Spannelemente oder Spannkörper.

Diese Anordnung der Spannelemente erlaubt auch ohne zusätzliche Fixierbauteile sowohl in der Spannstellung wie auch in der Lösestellung des Spannsystems eine eindeutige axiale wie auch radiale Fixierung der Spannkörper zueinander. Das erfindungsgemäße Spannsystem zeichnet sich daher durch einen einfachen und kompakten Aufbau aus, der auch ohne eine Vielzahl loser Bauteile eine zuverlässige und formstabile Anklammerung der zu verbindenden Teile ermöglicht. Zudem schafft die Verbindung der Spannelemente in der vorstehend beschriebenen Weise eine Spanneinrichtung, die sich, da sie keine losen Teile umfaßt, ohne großen mechanischen Aufwand im Aufnahmeabschnitt fixieren läßt.

Da bei dem erfindungsgemäßen Spannsystem des weiteren ein Minimum an bewegten Teilen vorliegt, entsteht bei deren Bewegung nur wenig Reibung. Auf diese Weise wird zwischen den beiden zu verbindenden Teilen eine relativ hohe Spannkraft erreicht.

Weitere vorteilhaften Ausgestaltungen des erfindungsgemäßen Spannsystems sind Gegenstand der Unteransprüche.

Die Spannelemente sind vorzugsweise als die Schenkel einer einstückig ausgebildeten, U-förmigen Spanngabel ausgeführt. Bei einer derartigen Gestaltung umfaßt die Spanneinrichtung demnach nur noch die Spanngabel und die Betätigungseinrichtung, so daß sich die Zahl der erforderlichen Bauteile auf zwei Bauteile reduziert. Die einstückige Gestaltung der Spannelemente in Form einer Spanngabel schafft ferner die Möglichkeit, durch Biegeeigenspannungen der Spanngabel die Spannkraft zwischen den beiden zu verbindenden Teilen zu erhöhen. Die Spannkraft wird dabei durch die Federkraft der Spanngabel bei gelöster Betätigungseinrichtung erzeugt. Diese Federkraft kann durch eine entsprechende Formgebung im spannungsfreien Zustand eingestellt werden. Die einstückige Ausführung der Spannelemente in Form einer elastisch verformbaren Spanngabel erlaubt zudem eine einfache Montage der Spanneinrichtung in den Aufnahmeabschnitt, da nicht eine Vielzahl von losen Komponenten angeordnet und fixiert werden müssen.

Es ist jedoch auch möglich, die Spannelemente der Spanneinrichtung durch ein die Fußabschnitte der Spannelemente einschließendes Gelenk zu verbinden, dessen Drehachse senkrecht zur Längs- bzw. Drehachse der zu verbindenden Teile angeordnet ist. Diese Ausführung schafft im wesentlichen dieselben Vorteile wie die einstückige Ausführung der Spannelemente.

Die Spanneinrichtung des erfindungsgemäßen Spannsystems ist vorzugsweise in einem Bereich zwischen Kopfund Fußabschnitt mit einem radial nach außen ragenden Halteabschnitt in Form einer Spannschulter versehen und kann mit diesem Halteabschnitt in eine hinterschnittene Ausnehmung des Aufnahmeabschnitts eingehängt werden. Durch diese technisch einfache Maßnahme kann die Spanneinrichtung synchron mit der Bewegung der Spannkörper bzw. der Schwenkbewegung der Spannelemente in oder außer Eingriff mit der Ausnehmung des Aufnahmeabschnitts gebracht werden, je nachdem ob die Spannkörper in oder außer Eingriff mit der hinterschnittenen Spannschulter des Hohlschafts gebracht werden. Damit läßt sich demnach eine axiale Fixierung der Spanneinrichtung im Aufnahmeabschnitt ohne zusätzliche Fixierelemente erreichen.

Die Gestaltung der Ausnehmung in Form eines geschlossenen Ringquerschnitts stellt im besonderen keine Schwächung der Einhängeschulter der Ausnehmung des Aufnahmeabschnitts dar, wie es beispielsweise durch Ausfräsungen bei einer Bajonettverankerung bei herkömmlichen Spannsystemen auftreten kann. Im Vergleich zur Fertigung von mehreren Ausnehmungen, die sich nur abschnittsweise in Drehrichtung der Werkzeugaufnahme über die Innenumfangswand des Aufnahmeabschnitts erstrecken, erweist sich die Fertigung einer einzigen Ausnehmung in Form eines geschlossenen Ringquerschnitts zudem als besonders einfach. Eine derartige Gestaltung hat sich auch im Hinblick auf die Montage der Spanneinrichtung als vorteilhaft herausgestellt, da die Spanneinrichtung in den Aufnahmeabschnitt eingeführt werden kann, ohne auf deren Drehlage gegenüber dem Aufnahmeabschnitt achten zu müssen.

Um eine möglichst hohe Anpreßkraft zwischen den beiden zu verbindenden Teilen zu erreichen, hat es sich als besonders vorteilhaft erwiesen, die Spannkörper mit je einer Keilfläche zu versehen, die mit einer Gegenkeilfläche zusammenwirkt, die an einer hinterschnittenen Spannschulter des Hohlschafts, die vorzugsweise von einer Ausnehmung in Form eines geschlossenen Ringquerschnitts gebildet ist, vorgesehen ist. Durch diese Gestaltungsweise kann somit eine Art Keilgetriebe geschaffen werden, das sich durch einen verhältnismäßig hohen Wirkungsgrad auszeichnet.

Gemäß einer Weiterentwicklung des erfindungsgemäßen Spannsystems ist eine Abdrückvorrichtung vorgesehen, die automatisch beim Lösen des Eingriffs der Spannkörper mit der hinterschnittenen Spannschulter des Hohlschafts axial betätigt oder bewegt wird. Die axiale Betätigung der Abdrückvorrichtung führt zu einer Trennung der beiden verbundenen Teile. In diesem Fall kann die Zwangsbewegung der Spannkörper beim Lösen des Klammereingriffs der Spannkörper mit der hinterschnittenen Spannschulter dazu genutzt werden, eine auf die zu trennenden Komponenten axial wirkende Abdrückkraft zu erzeugen.

Erfindungsgemäß gelingt dies in einfacher Weise durch einen Abdrückkolben als Teil der Abdrückvorrichtung, der in einer zentrischen Ausnehmung des den Hohlschaft tragenden Teils angeordnet ist und, wenn der Eingriff der Spannkörper mit der hinterschnittenen Spannschulter des Hohlschafts gelöst wird, mit zunehmender Kraft synchron gegen eine Stützfläche des den Hohlschaft tragenden Teils drücken kann. Durch die zentrische Anordnung des Abdrückkolbens wird somit eine zentrisch wirkende, positive Kraft auf den den Hohlschaft tragenden Teil aufgebracht, was schließlich zur Trennung der beiden verbundenen Teile führt. Wegen der zentrisch wirkenden Kraft auf den den Hohlschaft tragenden Teil können auch u. U. auftretende Verkantungen und Verspannungen der beiden Teile ausgeschlossen werden.

Dabei hat es sich als vorteilhaft herausgestellt, am Abdrückkolben eine Konusfläche vorzusehen, auf die die Spannkörper beim Lösen des Spannsystems auflaufen können. Mit diesem einfachen "Keilgetriebe" kann eine ausreichend hohe Abdrückkraft zwischen den Teilen erzeugt werden, so daß auch eine durch das Zusammenspannen zweier Teile mit konischen Passungsflächen entstandene feste Verbindung mit dem Lösen des Eingriffs der Spannkörper mit der hinterschnittenen

Wenn der Abdrückkolben und die Spanneinrichtung in den entsprechenden Ausnehmungen vorzugsweise durch Dichtringe, die in entsprechenden Ausnehmungen angeordnet sind, abgedichtet aufgenommen sind, läßt sich über die aneinandergeklammerten Teile zudem ein Kühl- und Schmiermittel beispielsweise einem in dem einen Teil eingespannten Schneidwerkzeug zuführen. Die Abdichtung des Abdrückkolbens und der Spanneinrichtung kann ferner für eine Stabilisierung dieser Komponenten genutzt werden, so daß auch schwingungsbedingte Klappergeräusche vermieden werden.

Das erfindungsgemäße Spannsystem ist demzufolge mit einem Kühl- und Schmiermittelzufuhrsystem kombinierbar. Dieses Kühl- und Schmiermittelzufuhrsystem besteht im besonderen aus einem Kanalabschnitt, der in dem den Aufnahmeabschnitt tragenden Teil ausgebildet ist, einem Kanalabschnitt, der in dem den Hohlschaft tragenden Teil ausgebildet ist, sowie zumindest einem die Spanneinrichtung überbrückenden und deren Drehlagenfixierung bewirkenden Leitungsabschnitt. Der Leitungsabschnitt des Kühl- und Schmiermittelzufuhrsystems kann dabei eine Drehlagenfixierung der Spanneinrichtung im Aufnahmeabschnitt bewirken, so daß diesbezüglich keine weiteren konstruktionellen Maßnahmen oder sonstige Fixierelemente erforderlich sind.

Der Leitungsabschnitt ist vorzugsweise als ein zwischen den zu verbindenden Teilen angeordnetes Rohr ausgeführt, dessen Hohlschaft-seitiges Ende in einer entsprechenden Ausnehmung des Abdrückkolbens form- und/oder kraftschlüssig, vorzugsweise abgedichtet verlötet, aufgenommen ist, dessen Schaftabschnitt verschiebbar, vorzugsweise durch einen Dichtring abgedichtet, durch eine entsprechende Ausnehmung im Verbindungsabschnitt der Fußabschnitte der Spannelemente geführt ist und dessen Aufnahmeabschnitt-seitiges Ende mit Passung in einer entsprechenden Ausnehmung in dem den Aufnahmeabschnitt tragenden Teil aufgenommen ist.

Wie vorstehend bereits beschrieben, kann der Leitungsabschnitt oder das Rohr zur Drehlagenfixierung der Spanneinrichtung im Aufnahmeabschnitt genutzt werden. Der Leitungsabschnitt oder das Rohr ist dabei in der Weise zwischen den Spannkörpern angeordnet, daß die Spannkörper den Leitungsabschnitt oder das Rohr in der Lösestellung des Spannsystems zwischen sich einklemmen. Dies bewirkt, daß das Kühl- und Schmiermittelzufuhrsystem in der Lösestellung des Spannsystems im Aufnahmeabschnitt festgehalten wird, ohne daß zusätzliche Fixierelemente erforderlich sind.

Vorzugsweise sind die zu verbindenden Teile als rotationssymmetrische Teile und die Anpreßflächen der zu verbindenden Teile als Radialringflächen ausgeführt. Dies trägt entscheidend zu einem einfachen und damit kostengünstigen Spannsystems bei.

Um eine möglichst innige Verbindung zwischen den beiden zu verbindenden Teilen zu erhalten und damit die Drehmomentübertragungsverluste möglichst gering zu halten, sind die Passungsflächen zwischen Hohlschaft und Aufnahmeabschnitt vorzugsweise von Konusflächen gebildet.

Der Antrieb der Betätigungseinrichtung erfolgt vorzugsweise über einen quer zur Längs- bzw. Drehachse der beiden zu verbindenden Teile verlaufenden radialen Durchbruch, vorzugsweise über eine radiale Bohrung, in den von außen ein Werkzeug, beispielsweise in Form eines Inbus-Schlüssels.

Weiterhin wird eine Ausführung des Spannsystems bevorzugt, bei dem die die Spannkörper betätigende Betätigungseinrichtung als eine Spannschraube mit einem Kopfabschnitt und einem Gewindeabschnitt realisiert ist, wobei der Kopfabschnitt in einer entsprechend gestalteten Ausnehmung des einen Spannkörpers und der Gewindeabschnitt in einer entsprechenden Gewindebohrung des anderen Spannkörpers angeordnet ist.

Als eine vorteilhafte Ausgestaltung der Spannschraube hat sich herausgestellt, wenn der Gewindeabschnitt der Spannschraube einen Linksgewindeabschnitt und einen Rechtsgewindeabschnitt aufweist, von denen einer in der Gewindebohrung des anderen Spannkörpers angeordnet ist, und an der andere in einer als Kopfabschnitt fungierenden Mutter angeordnet ist, die in der entsprechend gestalteten Ausnehmung des einen Spannkörpers angeordnet ist. Der Vorteil dieser Ausgestaltung ist, daß bedingt durch das Links/Rechtsgewinde der Spannschraube relativ kleine Drehbewegungen erforderlich sind, um einen relativ großen "Hub" der Spannelemente zu bewirken; des weiteren wird die als Kopfabschnitt fungierende Mutter nur auf Zug beansprucht und erfährt damit keinen reibungsbedingten Verschleiß.

Neben einer rotationssymmetrischen Gestaltung der beiden zu verbindenden Teile hat es sich als vorteilhaft herausgestellt, auch die Spanneinrichtung aus einem zylindrischen Teil zu fertigen, so daß die Spannelemente und die Spannkörper eine kreisbogenförmige Außenfläche aufweisen und der Fußabschnitt der Spannelemente eine zylindrische Außenfläche besitzt.

Im Hinblick auf eine einfache Möglichkeit der Begrenzung des Spannhubs der Spannkörper hat es sich als besonders vorteilhaft erwiesen, wenn die Spannelemente im gespannten oder zusammengeklammerten Zustand der beiden zu verbindenden Teile an der Innenumfangswand der Ausnehmung des Aufnahmeabschnitts anliegen können. Auf diese Weise kann ein maximal zulässiger Spannhub der Spannelemente und damit der Spannkörper ohne zusätzliche Begrenzungselemente oder Anschläge sicher eingehalten werden.

Als eine konstruktiv einfach zu realisierende Maßnahme zur Verkürzung der axialen Baulänge der Spanneinrichtung und damit des Spannsystems insgesamt ist es ferner von Vorteil, die Spannelemente auf Seiten ihrer Fußabschnitte jeweils mit wenigstens einer den Querschnitt schwächenden Einkerbung zu versehen. Dadurch läßt sich die zum Zusammenklemmen der Spannelemente erforderliche Kraft herabsetzen und als positive Folge daraus die erforderliche "Hebelarmlänge" der Spannelemente erheblich verkürzen.

Weitere vorteilhafte Merkmale der vorliegenden Erfindung ergeben sich aus der nachfolgenden Beschreibung, in der anhand einer schematischen Zeichnung ein bevorzugtes Ausführungsbeispiel dieser Erfindung näher erläutert wird.

### Kurze Beschreibung der Zeichnung

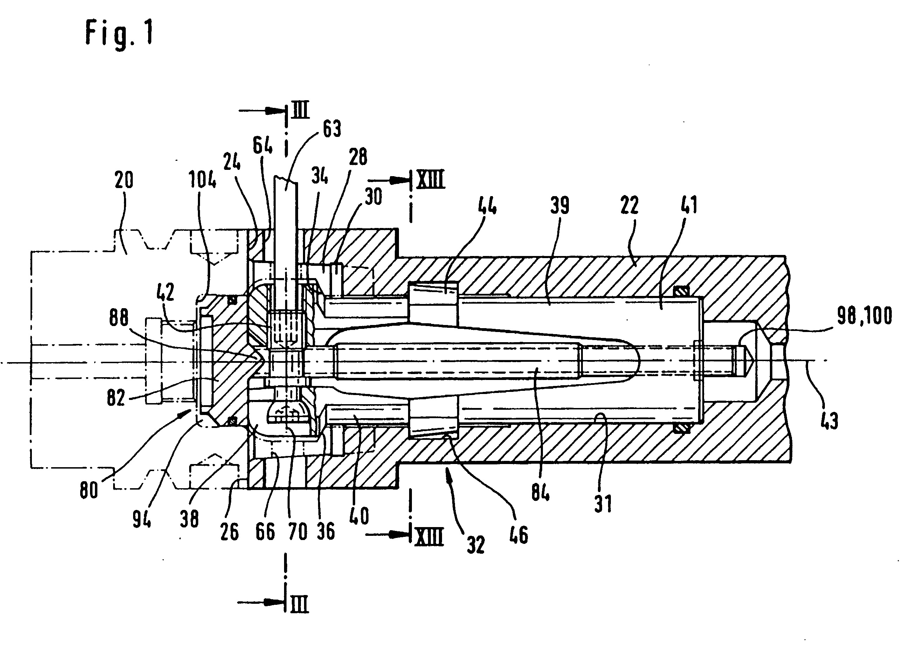

Fig. 1 einen schematischen Axialschnitt - teilweise aufgebrochen - des erfindungsgemäßen Spannsystems gemäß dem bevorzugten Ausführungsbeispiel im aneinandergeklammerten Zustand zweier zu verbindender Teile;
Fig. 1 einen schematischen Axialschnitt - teilweise aufgebrochen - des erfindungsgemäßen Spannsystems gemäß dem bevorzugten Ausführungsbeispiel im aneinandergeklammerten Zustand zweier zu verbindender Teile;
Fig. 3 einen Querschnitt durch das erfindungsgemäße Spannsystem in Fig. 1 entlang der Linie "III-III";
Fig. 4 einen Querschnitt durch das erfindungsgemäße Spannsystem in Fig. 2 entlang der Linie "IV-IV";
Fig. 5 eine schematische Ansicht - teilweise aufgebrochen - einer Spanneinrichtung des erfindungsgemäßen Spannsystems;
Fig. 6 einen Querschnitt durch die Spanneinrichtung entlang der Linie "VI-VI" in Fig. 5;
Fig. 7 eine schematische Draufsicht der Spanneinrichtung in Fig. 5;
Fig. 8 eine schematische Ansicht - teilweise aufgebrochen - einer KSM-Abdrückvorrichtung;
Fig. 9 eine schematische Ansicht eines Abdrückkolbens bei einer Blickrichtung entsprechend der Pfeile "IX" in Fig. 8.
Fig. 10 einen Querschnitt des Aufnahmeabschnitts der Werkzeugaufnahme gemäß einem zweiten Ausführungsbeispiel;
Fig. 11 und Fig. 12 einen Querschnitt durch die Spanneinrichtung entlang der Linie XI-XI im Lösezustand des Spannsystems gemäß dem zweiten Ausführungsbeispiel;
Fig. 13 einen Querschnitt durch die Spanneinrichtung entlang der Linie XIII-XIII im Spannzustand des Spannsystems gemäß dem zweiten Ausführungsbeispiel.
Fig. 14 einen schematischen Axialschnitt - teilweise aufgebrochen - des erfindungsgemäßen Spannsystems gemäß einem dritten Ausführungsbeispiel im aneinandergeklammerten Zustand der beiden zu verbindenden Teile;
Fig. 1 einen schematischen Axialschnitt - teilweise aufgebrochen - des erfindungsgemäßen Spannsystems gemäß dem bevorzugten Ausführungsbeispiel im aneinandergeklammerten Zustand zweier zu verbindender Teile;

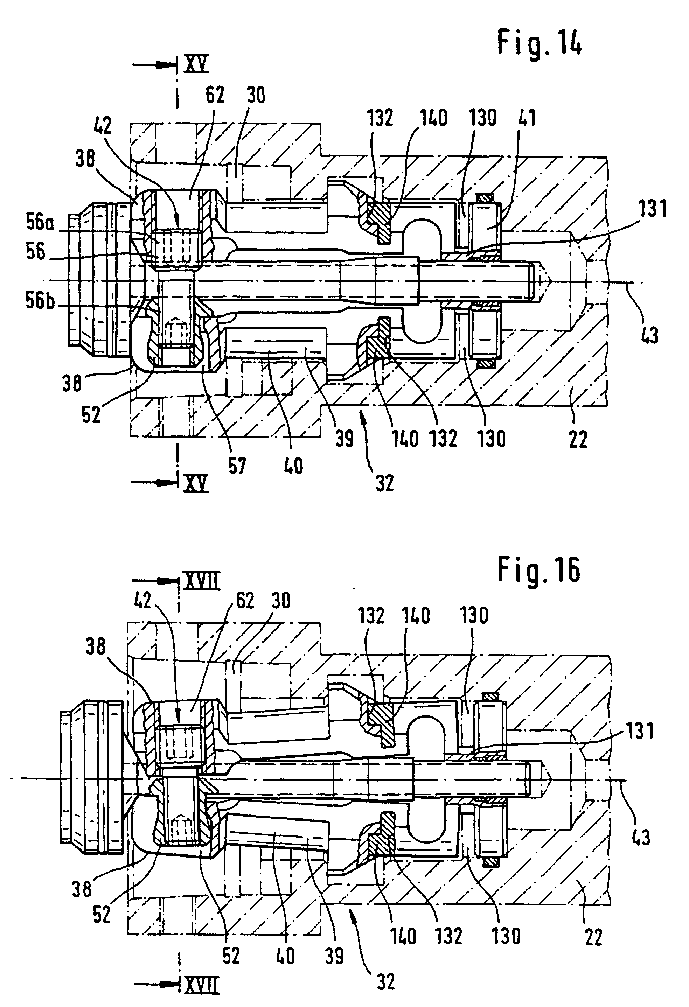

Fig. 16 einen Querschnitt durch das erfindungsgemäße Spannsystem in Fig. 14 entlang der Linie "XV-XV";

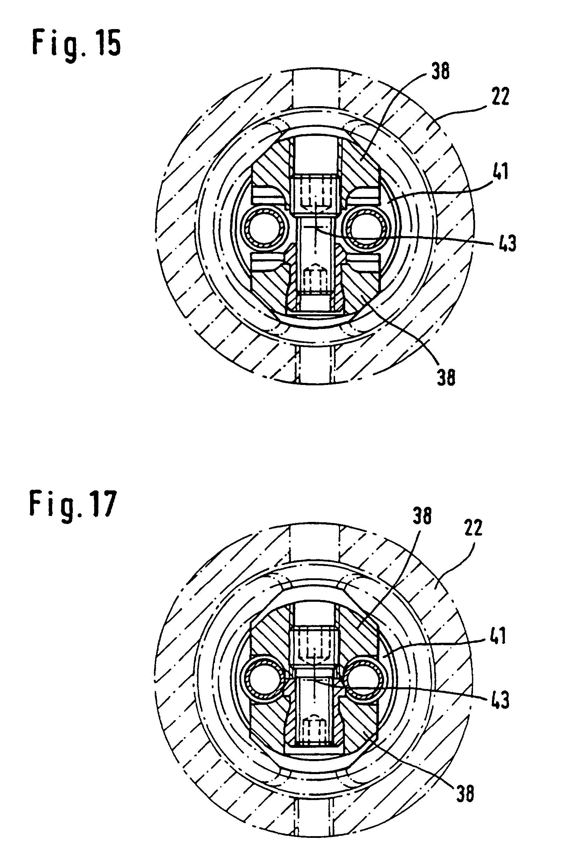

Fig. 17 einen Querschnitt durch das erfindungsgemäße Spannsystem in Fig. 16 entlang der Linie "XVII-XVII";

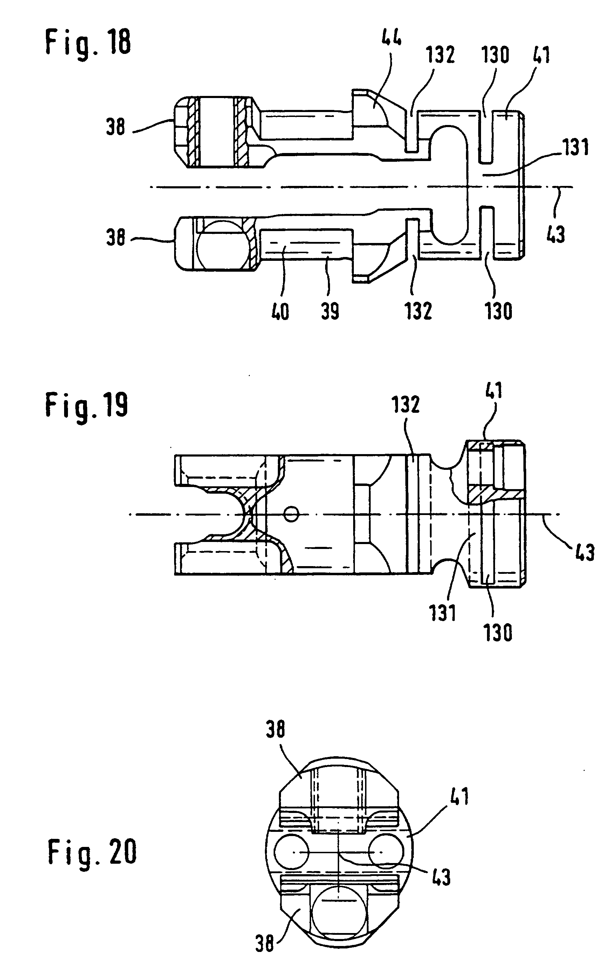

Fig. 18 eine Seitenansicht - teilweise aufgebrochen - der Spanneinrichtung des erfindungsgemäßen Spannsystems gemäß dem dritten Ausführungsbeispiel;
Fig. 19 eine Draufsicht - teilweise aufgebrochen - der Spanneinrichtung des erfindungsgemäßen Spannsystems gemäß dem dritten Ausführungsbeispiel; und
Fig. 20 eine Vorderansicht der Spanneinrichtung des erfindungsgemäßen Spannsystems gemäß dem dritten Ausführungsbeispiel.

### Wege zur Ausführung der Erfindund

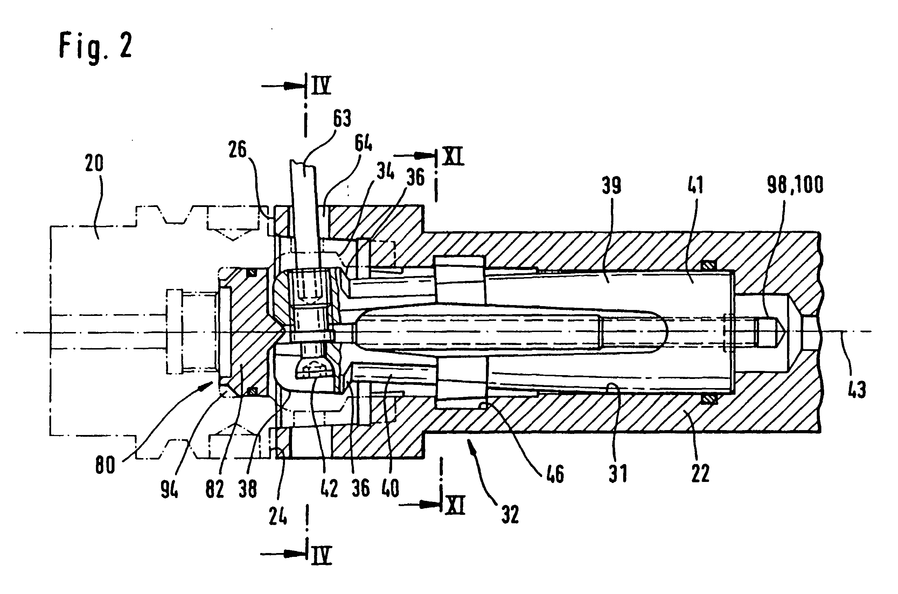

In Fig. 1 und 2 ist mit dem Bezugszeichen 20 ein im folgenden als Werkzeug bezeichnetes Teil, beispielsweise ein Werkzeugsystemmodul in Form einer Werkzeug-Grundaufnahme, und mit dem Bezugszeichen 22 ein im folgenden als Werkzeugaufnahme bezeichnetes Teil, beispielsweise eine Spindel einer Werkzeugmaschine, dargestellt. Es sei jedoch bereits an dieser Stelle darauf hingewiesen, daß das nachfolgend näher zu beschreibende Spannsystem die Schnittstelle zweier zweier zu verbindender Teile betrifft und daher für alle Anwendungsgebiete in Frage kommt, in denen es darum geht, zwei Teile zentriert und lösbar miteinander zu verbinden.

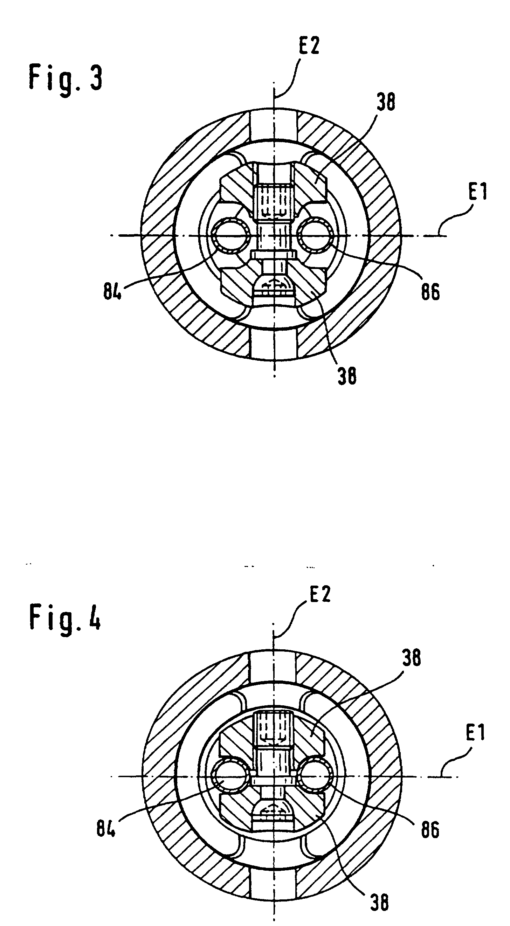

In Fig. 1 und Fig. 3 sind das Werkzeug 20 und die Werkzeugaufnahme 22 im aneinander geklammerten Zustand oder Spannzustand gezeigt, in dem eine Radialringfläche 24 des Werkzeugs 20 gegen eine Radialringfläche 26 der Werkzeugaufnahme 22 gepreßt ist, während gleichzeitig ein mit 28 bezeichneter Hohlschaft des Werkzeugs 20 zentriert in einer entsprechenden Ausnehmung 30 eines Aufnahmeabschnitts 32 der Werkzeugaufnahme 22 aufgenommen ist.

Fig. 2 und Fig. 4 zeigen das Werkzeug 20 und die Werkzeugaufnahme 22 im zusammengefügten aber nicht aneinander geklammerten Zustand. Auch in diesem Zustand ist der Hohlschaft 28 des Werkzeugs 20 bereits in der Ausnehmung 30 der Werkzeugaufnahme 22 aufgenommen. Jedoch ist zwischen den beiden Radialringflächen 24, 26 ein Planspalt ausgebildet, da das Werkzeug 20 gegen einen Abdrückkolben 82 einer später ausführlich zu beschreibenden Abdrückvorrichtung 80 stößt.

In dem in Fig. 1 und Fig. 2 gezeigten Ausführungsbeispiel sind die Passungsflächen zwischen dem Hohlschaft 28 und der Ausnehmung 30 von Konusflächen gebildet. Es ist jedoch gleichermaßen möglich, die Zentrierung des Hohlschafts 28 in der Ausnehmung 30 über Zylinderflächen vorzunehmen.

Obwohl im aneinandergeklammerten Zustand des Werkzeugs 20 und der Werkzeugaufnahme 22 die innige Verbindung zwischen den konischen Passungsflächen bereits eine Verdrehsicherung des Werkzeugs 20 und der Werkzeugaufnahme 22 bewirkt, kann eine zusätzliche Verdrehsicherung zwischen dem Werkzeug 20 und der Werkzeugaufnahme 22 beispielsweise auch durch wenigstens einen Nitnehmerstein realisiert werden, der in eine entsprechende Stirnausnehmung entweder des Hohlschafts oder des Aufnahmeabschnitts eingreift.

Bei dem in Fig. 1 und Fig. 2 gezeigten Ausführungsbeispiel sind die zu verbindenden Teile 20, 22 ebenso wie der Hohlschaft 28 und die in diesen Teilen ausgebildeten Ausnehmungen, beispielsweise die Ausnehmung 30, rotationssymmetrisch gestaltet. Es ist jedoch hervorzuheben, daß die Erfindung nicht nur auf eine solche Gestaltung festgelegt ist.

Das erfindungsgemäße Spannsystem muß in der Lage sein, die zu verbindenden Teile 20, 22 in vorgegebener radialer wie auch axialer Positionierung fest aneinander zu klammern. Als ein weiteres erfindungswesentliches Merkmal ist neben einer minimalen Anzahl von Bauteilen und einer einfachen Montierbarkeit eine leichte Lösbarkeit der verbundenen Teile unter Verwirklichung kleiner Aushubwege zu beachten. Zu diesem Zweck besitzt das erfindungsgemäße Spannsystem folgenden Aufbau:

Der Hohlschaft 28 ist radial innenliegend mit einer hinterschnittenen Spannschulter 34 ausgestattet. Die Spannschulter 34 wird von einer der Werkzeugaufnahme zugewandten Keilfläche einer ringförmigen Ausnehmung des Hohlschafts 28 gebildet. Gegen die Spannschulter 34 können sich beim Betätigen des Spannsystems die Keilflächen 36 zweier Spannkörper 38 legen, um vorzugsweise mit Kraftübersetzung eine feste Anklammerung des Werkzeugs 20 an die Werkzeugaufnahme 22 zu bewirken.

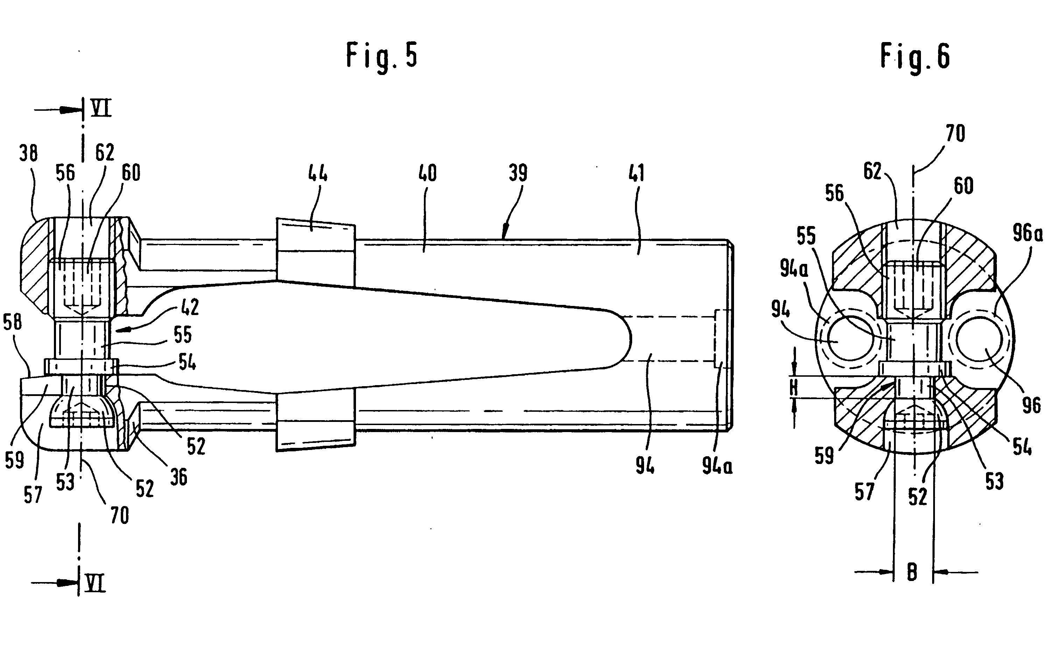

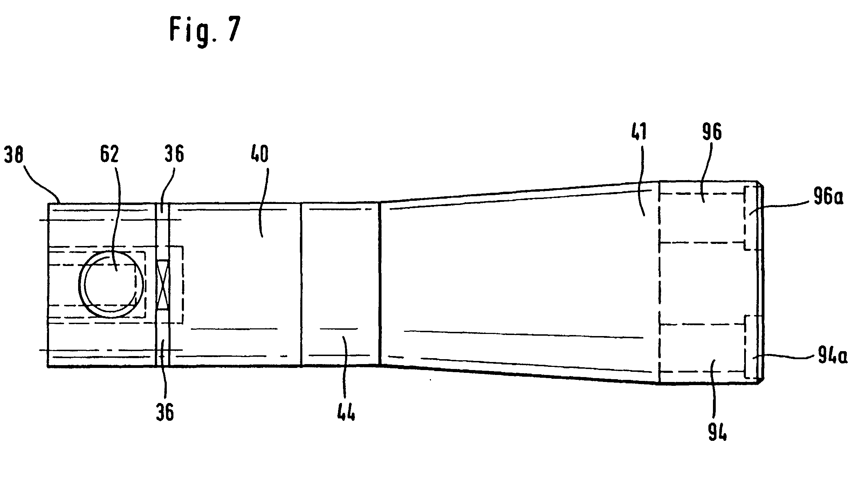

In einer axialen Führungsausnehmung 31 des Aufnahmeabschnitts 32 der Werkzeugaufnahme 22 ist eine Spanneinrichtung 39 angeordnet, welche am Grund der Führungsausnehmung über einen Dichtring an der Innenumfangswand der Führungsausnehmung 31 anliegt. Wie es insbesondere in Fig. 5 und Fig. 6 zu sehen ist, umfaßt die Spanneinrichtung 39 eine einstückig ausgebildete, U-förmige Spanngabel und eine Betätigungseinrichtung in Form einer Spannschraube 42. Die Spanngabel ist vorzugsweise aus einem zylindrischen Körper gefertigt, wie es aus der Darstellung gemäß Fig. 6 noch zu erkennen ist. Fig. 7 zeigt eine Draufsicht auf die Spanngabel. Sie besteht aus zwei im wesentlichen parallel zur Längs- oder Drehachse 43 der Werkzeugaufnahme 22 verlaufenden Spannelementen 40, die von den Schenkeln der U-förmigen Spanngabel gebildet sind. Die Spannelemente 40 haben vorzugsweise eine der Umfangsfläche der axialen Führungsausnehmung 31 des Aufnahmeabschnitts 32 entsprechende kreisbogenförmige Außenfläche. Die Kopfabschnitte der beiden Spannelemente 40 bilden die Spannkörper 38, die mit den Keilflächen 36 versehen sind. Die Spannschraube 42 steht, wie es in Fig. 5 und Fig. 6 zu sehen ist und nachstehend noch ausführlicher beschrieben wird, kraft- und formschlüssig mit den beiden Spannkörpern 38 in Verbindung. Die Spannelemente 40 sind an ihren Fußabschnitten 41 einstückig, vorzugsweise in Form eines sogenannten "Materialgelenks", miteinander verbunden. Gemäß dieser Erfindung wäre es jedoch auch möglich, die Fußabschnitte der Spannelemente 40 als Bestandteile eines die Spannelemente 40 verbindenden Gelenks auszuführen.

Zwischen den Spannkörpern 38 und dem Gelenk 41 sind an den Spannelementen 40 Halteabschnitte 44 vorgesehen, mit denen die Spanneinrichtung 39 in einer hinterschnittenen Ausnehmung 46 der axialen Führungsausnehmung 31 des Aufnahmeabschnitts 32 einhängbar und damit in der Werkzeugaufnahme 22 axial fixierbar ist. Die hinterschnittene Ausnehmung 46 besitzt einen geschlossenen Ringquerschnitt. Da die Spanngabel, wie vorstehend erwähnt, eine zylindrische Außenkontur besitzt, sind die Halteabschnitte 44 demnach diametral zueinander an den Spannelementen 40 angeordnet und haben die Form von radial vorstehenden Abstütznasen oder Schulterabschnitten.

Die Spannschraube 42 weist gemäß der Darstellung in Fig. 5 und Fig. 6 einen kugelförmigen Kopfabschnitt 52, einen an den Kopfabschnitt 52 anschließenden Halsabschnitt 53 mit einem im Vergleich zum Kopfabschnitt kleineren Durchmesser, einen auf den Halsabschnitt 53 folgenden Ringabschnitt 54 mit einem im Vergleich zum Halsabschnitt 53 größeren Durchmesser, einen an den Ringabschnitt 54 anschließenden Schaftabschnitt 55 mit einem im Vergleich zu einer Gewindebohrung 62 des in Fig. 5 oberen Spannkörpers 38 kleineren Durchmesser sowie einen an den Schaftabschnitt 55 anschließenden Gewindeabschnitt 56, der in der Gewindebohrung 62 des oberen Spannkörpers 38 in Fig. 5 aufgenommen ist. Der Gewindeabschnitt 56 der Spannschraube 42 weist eine gestrichelt angedeutete Ausnehmung 60, vorzugsweise eine Innen-Sechskantausnehmung, auf.

Der in Fig. 5 untere Spannkörper 38 weist eine der Kontur des kugelförmigen Kopfabschnitts 52 im wesentlichen entsprechende konkave Ausnehmung 57 auf, die in Richtung zum oberen Spannkörper von einem Bodenabschnitt 58 begrenzt ist, der eine Höhe H (Fig. 6) hat, die in etwa der axialen Länge des Halsabschnitts 53 entspricht. Der Bodenabschnitt 58 ist von seiner Stirnseite aus, d. h. von der Fig. 5 linken Seite aus, mit einem Schlitz 59 versehen, der eine Breite B (Fig. 6) hat, die etwas größer ist als der Durchmesser des Halsabschnitts 53. Die Spannschaube 42 kann daher mit ihrem Halsabschnitt 53 in den Schlitz 59 eingesetzt werden, wie es beispielsweise in Fig. 5 und Fig. 6 gezeigt ist, wobei der Bodenabschnitt 58 der Ausnehmung 57 zwischen dem Kopfabschnitt 52 und dem Ringabschitt 54 mit Spiel aufgenommen ist.

Der in Fig. 5 obere Spannkörper 38 weist eine Gewindebohrung 62 auf, in der der Gewindeabschnitt 56 der Spannschraube 42 aufgenommen ist. Der Gewindeabschnitt 56 steht demnach mit dem Spannkörper 38 in Funktionseingriff.

Wie es vorstehend bereits erwähnt wurde, steht die Spannschraube 42 mit den beiden Spannkörpern 38 der Spanneinrichtung 39 in Verbindung. Eine Drehbetätigung der Spannschraube 42 bewirkt demzufolge eine Schwenkbewegung der Spannelemente 40 um eine nicht dargestellte, fiktive, senkrecht zur Achse 43 der Werkzeugaufnahme 22 stehende Drehachse. Wie es in Fig. 1 und 2 dargestellt ist, erfolgt die Drehbetätigung der Spannschraube 42 durch ein im wesentlichen senkrecht zur Längs- bzw. Drehachse 43 der Werkzeugaufnahme 22 radial von außen eingeführtes Werkzeug 63, vorzugsweise in Form eines Inbus-Schlüssels, das durch einen radialen Durchbruch 64 im Aufnahmeabschnitt 32 der Werkzeugaufnahme 22 einerseits und durch einen radialen Durchbruch 66 im Hohlschaft 28 des Werkzeugs 20 andererseits in die vorstehend beschriebene Ausnehmung 60 der Spannschraube 42 eingeführt wird.

Aus Fig. 1 und Fig. 2 ist des weiteren ersichtlich, daß eine Drehachse 70 der Spannschraube 42 im wesentlichen mit den Achsen der radialen Durchbrüche 64, 66 fluchtet. Die radialen Durchbrüche 64, 66 sind vorzugsweise als Bohrungen ausgeführt.

Eine rechtsdrehende Betätigung der Spannschraube 42 führt zu einer synchronen Auseinanderbewegung der Spannkörper 38 und damit zu einer Klammerung des Werkzeugs 20 an die Werkzeugaufnahme 22. Eine linksdrehende Betätigung der Spannschraube 42 führt zu einer synchronen Annäherungsbewegung der Spannkörper 38 und damit zu einem Lösen der Keilflächenverbindung zwischen den Keilflächen 34, 36 und damit der Verbindung des Werkzeugs 20 und der Werkzeugaufnahme 22. Durch das Lösen des Spannsystems, d. h. durch das Zusammenbewegen der beiden Spannkörper 38 infolge einer linksdrehenden Betätigung der Spannschraube 42, werden in den Spannelementen 40 und im Fuß- bzw. Verbindungsabschnitt 41 Biegespannungen erzeugt, die beim Spannen des Spannsystems, d. h. beim Auseinanderbewegen der Spannkörper 38 infolge einer rechtsdrehenden Betätigung der Spannschraube 42, natürlich wieder abgebaut werden und damit den Hub der Spannkörper 38 radial nach außen sowie die Anklammerung des Werkzeugs 20 an die Werkzeugaufnahme 22 unterstützen. Die Federkraft der Spanngabel kann also zu einer Spannkraft zur Aneinanderklammerung der beiden Teile 20, 22 umgewandelt werden. Durch eine entsprechende Formgebung der Spanngabel im spannungsfreien Zustand ist es daher möglich, die Federkraft der Spanngabel und somit die bei einer linksdrehenden Betätigung der Spannschraube 42 erzeugten Biegespannungen zu erhöhen.

Die Darstellung in Fig. 5 läßt erkennen, daß die Spannkörper 38 durch die linksdrehende Betätigung der Spannschraube 42 maximal soweit zusammengeklemmt werden können, bis die beiden Spannkörper 38 an den Ringabschnitt 54 der Spannschraube 42 anstoßen. Durch eine entsprechende Bemessung der axialen Länge des Schaftabschnitts 55 wird dabei verhindert, daß der Gewindeabschnitt, 56 außer Eingriff mit der Gewindebohrung 62 geraten kann. In diesem vollständig zusammengeklemmten Zustand der Spannkörper 38 ist der Eingriff der Keilflächen 36 der Spannschrauben 38 mit der hinterschnittenen Spannschulter 34 des Hohlschafts 28 aufgehoben, so daß das Werkzeug 20 von der Werkzeugaufnahme entfernt werden kann.

Aus der Darstellung gemäß Fig. 1 ist ersichtlich, daß die Spannkörper 38 durch die rechtsdrehende Betätigung der Spannschraube 42 nur soweit auseinander bewegt werden können, bis sie an der Innenumfangswand des Aufnahmeabschnitts 32 der Werkzeugaufnahme anliegen. Auf diese Weise wird selbst ohne einen werkzeugbedingten Anschlag zur Begrenzung des Spannhubs der Spannkörper verhindert, daß ein maximal zulässiger Spannhub überschritten wird, bei dem der Gewindeabschnitt 56 der Spannschraube 42 außer Eingriff mit der Gewindebohrung 62 des Spannkörpers 38 gerät. Ein Weiterdrehen der Spannschraube 42 nach Erreichen des maximal zulässigen Spannhubs der Spannkörper 38 wird somit durch das Anliegen der Spannelemente an der Umfangswand der Ausnehmung im Aufnahmeabschnitt automatisch unterbunden.

Gemäß der in Fig. 1 gezeigten Spannstellung drücken sich die Spannkörper 38 über die Keilflächen 36 an der Keilfläche der Spannschulter 34 ab, wobei sie sich gegenseitig an der Spannschraube 42 abstützen.

In der in Fig. 1 gezeigten Spannstellung des erfindungsgemäßen Spannsystems bewirkt der Keilflächenkontakt 34, 36, daß der Hohlschaft 28 des Werkzeugs 20 tendenziell aufgeweitet wird, wodurch der Passungskonktakt zwischen dem Hohlschaft 28 und der Ausnehmung 31 noch inniger wird. In diesem Spannnungszustand liegt demnach eine reib- und kraftschlüssige Verbindung zwischen den Passungsflächen des Hohlschafts 28 und der Ausnehmung 30 einerseits und zwischen den Keilflächen 34, 36 andererseits vor, wodurch die Spanneinrichtung 39 in ihrer Drehlage bezüglich der Werkzeugaufnahme 22 fixiert wird.

Weitere Bestandteile des erfindungsgemäßen Spannsystems bilden eine Abdrückvorrichtung sowie ein Kühlund Schmiermittelzufuhrsystem, die in diesem Ausführungsbeispiel als ein Bauteil ausgeführt sind und daher im folgenden als KSM-Abdrückvorrichtung 80 bezeichnet werden.

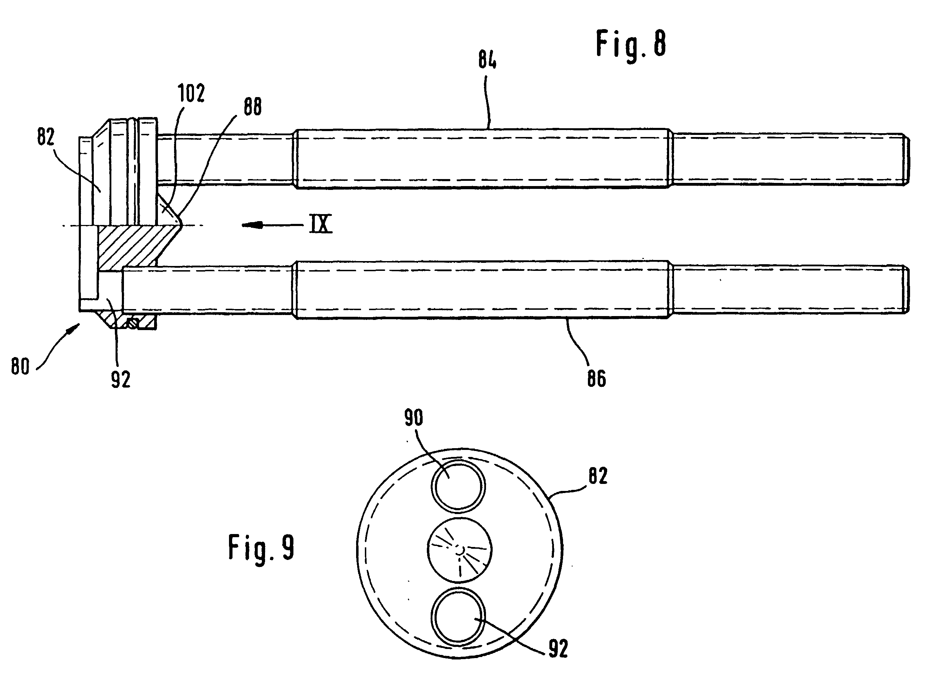

Der Aufbau dieser KSM-Abdrückvorrichtung ist im besonderen in Fig. 8 und Fig. 9 dargestellt. Die KSM-Abdrückvorrichtung 80 besteht im wesentlichen aus einem Abdrückkolben 82 sowie zwei Rohren 84, 86. Der Abdrückkolben 82 ist als ein rotationssymmetrisches Bauteil mit einem zentrisch angeordneten Vorsprung 88 sowie zwei axialen Ausnehmungen, vorzugsweise Bohrungen, 90, 92 ausgeführt, wie es aus Fig. 9 ersichtlich ist. Die Rohre 84, 86 sind in den axialen Ausnehmungen 90, 92 des den Hohlschaft tragenden Teils abgedichtet verlötet und erstrekken sich im eingebauten Zustand gemäß Fig. 1 oder Fig. 2 vom Abdrückkolben 82 in die Führungsausnehmung 31 des Aufnahmeabschnitts 32 der Werkzeugaufnahme 22.

Wie es in Fig. 1 und Fig. 2 gezeigt ist, ist der Abdrückkolben 82 mittels eines Dichtrings, der in einer entsprechenden Ringnut am Außenumfang des Abdrückkolbens 82 aufgenommen ist, in einer zentrischen Ausnehmung 94 des Werkzeugs 20 abgedichtet angeordnet. Wie es insbesondere aus Fig. 3 und Fig. 4 hervorgeht, ist eine die Mittelachsen der Rohre 84, 86 verbindende und die Längs- bzw. Drehachse 43 beinhaltende Ebene E1 bezüglich einer die Spannelemente 40 verbindenden und ebenfalls die Längs- bzw. Drehachse 43 beinhaltenden Ebene E2 um 90° verdreht. Gemäß Fig. 1 und Fig. 2 erstrecken sich die Rohre 84, 86 in die Führungsausnehmung 31 des Aufnahmeabschnitts 32 der Werkzeugaufnahme 22 über entsprechend angeordnete axiale Ausnehmungen 94, 96 des Fuß- bzw. Verbindungsabschnitts 41 der Spanngabel in entsprechend vorgesehene Ausnehmungen 98, 100 der Werkzeugaufnahme 22. Während die Schaftabschnitte der Rohre 84, 86 in den axialen Ausnehmungen 94, 96 des Gelenkabschnitts 41 leicht verschiebbar aufgenommen sind, sind sie in den axialen Ausnehmungen 98, 100 der Werkzeugaufnahme 22 mit Passung aufgenommen, wobei zur Abdichtung Ausnehmungen 94a, 96a vorgesehen sind, in denen jeweils ein Dichtring aufgenommen ist, wie es in Fig. 6 gezeigt ist.

Die axialen Ausnehmungen 94, 96 des Werkzeugs sowie die axialen Ausnehmungen 98, 100 der Werkzeugaufnahme bilden Kanalabschnitte des Kühl- und Schmiermittelzufuhrsystems. Die Rohre 84, 86 haben einerseits die Funktion von Leitungsabschnitten, die die Kanalabschnitte im Werkzeug 20 und in der Werkzeugaufnahme 22 verbinden und die Spanneinrichtung 39 überbrücken, und bewirken andererseits, da sie in axialen Ausnehmungen des Gelenkabschnitts 41 der Spanneinrichtung 39 aufgenommen sind, zusätzlich zu der durch die Verspannung des Werkzeugs und der Werkzeugaufnahme geschaffenen Drehlagenfixierung eine weitere Drehlagenfixierung der Spanneinrichtung in der Werkzeugaufnahme. Auf diese Weise wird insbesondere in der Lösestellung des Spannsystems ein Verdrehen der Spanneinrichtung in der Werkzeugaufnahme verhindert.

Wie es insbesondere aus Fig. 4 hervorgeht, klemmen die beiden Spannkörper 38 in der Lösestellung des Spannsystems die beiden Rohre 84 und 86 in der Weise ein, daß ein Herausfallen der KSM-Abdrückvorrichtung 80 in der Lösestellung des Spannsystems in einfacher Weise unterbunden wird.

Der Abdrückkolben 82 der KSM-Abdrückvorrichtung 80 weist einen zentrischen Vorsprung 88 mit einer Konusfläche 102 an der der Werkzeugaufnahme und insbesondere den Spannkörpern 38 zugewandten Seite auf. Beim Lösen des Eingriffs der Keilflächen 36 der Spannkörper 38 mit der an der hinterschnittenen Spannschulter 34 vorgesehenen Keilfläche infolge einer entsprechenden Drehbetätigung der Spannschraube 42 bewegen sich die Spannkröper 38 radial nach innen aufeinander zu. Der Funktionskontakt zwischen den Keilflächen 36 und der Spannschulter 34 wird allmählich aufgehoben. Gleichzeitig laufen die Spannkörper 38 synchron auf die Konusfläche 102 des Abdrückkolbens 82 auf. Durch ein Weiterdrehen der Spannschraube 42 wird die von der Spannschraube 42 auf die Spannkörper 38 aufgebrachte, radial wirkende Kraft in eine auf den Abdrückkolben 82 wirkende, axial gerichtete Kraft umgewandelt, wodurch dieser mit zunehmender Kraft gegen eine Stützfläche 104 der zentrischen Ausnehmug 94 des Werkzeugs 22 gedrückt wird, so daß eine zentrisch wirkende, positive Kraft auf das Werkzeug aufgebracht wird. Die Spannkörper 38 werden damit synchron zum Bestandteil eines Keilgetriebes, mit dem der Hohlschaft 28 aus dem Aufnahmeabschnitt 32 herausgedrückt werden kann, wobei sich der Abdrückkolben 82 an der Stützfläche 104 abstützt. Dies führt demnach zu einer automatischen Trennung der durch den Eingriff der Keilflächen 36 der Spannkörper 38 mit der hinterschnittenen Spannschulter 34 geschaffenen Verbindung zwischen Werkzeug und Werkzeugaufnahme. Da der Abdrückkolben zentral angeordnet ist, lassen sich sehr einfach symmetrische Kraftverhältnisse für den Abdrückvorgang realisieren, so daß selbst bei innigster Haftung zwischen konisch ausgebildeten Zentrierflächen auf der Außenfläche des Hohlschafts einerseits und auf Seiten der Ausnehmung 30 des Aufnahmeabschnitts 32 andererseits eine zuverlässige Trennung der beiden Teile 20, 22 bewirkt werden kann.

Im folgenden wird die Montage/Demontage des Werkzeugs an die/von der Werkzeugaufnahme sowie die Wirkungsweise des erfindungsgemäßen Spannsystems näher beschrieben, wobei von einem Zustand ausgegangen wird, in dem sämtliche Bauteile, d. h. das Werkzeug, die Werkzeugaufnahme und die Spanneinrichtung, einzeln vorliegen, d. h. auseinandergebaut sind.

Die Montage des Werkzeugs an die Werkzeugaufnahme beginnt mit dem Zusammenklemmen der Spannkörper 38. Dies erfolgt, indem zunächst ein geeignetes Werkzeugs 63, im erläuterten Ausführungsbeispiel ein Inbus-Schlüssel, in die Ausnehmung 60, im Fall dieses Ausführungsbeispiels in eine Innen-Sechskantausnehmung, der Spannschraube 42 eingeführt und anschließend linksdrehend betätigt wird. Die Spannschraube muß vorher natürlich, wie es in Fig. 5 und Fig. 6 gezeigt ist, bereits in die entsprechenden Ausnehmungen 62, 57 der Spannkörper 38 eingesetzt werden. Die linksdrehende Betätigung der Spannschraube 42 bewirkt eine Annäherung der beiden Spannkörper 38, bis der in Fig. 5 obere Spannkörper 38 am Ringabschnitt 54 der im unteren Spannkörper 38 festgehaltenen Spannschraube 42 anliegt. In diesem Zustand lassen sich die Halteabschnitte 44 der Spannelemente 40 in einen Kreis einordnen, der einen Durchmesser hat, der in etwa dem der Ausnehmung 31 des Aufnahmeabschnitts 32 der Werkzeugaufnahme 22 entspricht; auf jeden Fall dürfen die Halteabschnitte 44 das nachstehend beschriebene Einsetzen der Spanneinrichtung in die Werkzeugaufnahme 22 nicht behindern. Mit dem Zusammenklemmen der Spannkörper 38 in der vorstehend beschriebenen Weise werden in der Spanngabel, d. h. insbesondere in den Spannelementen 40 und im Verbindungsabschnitt 41, Biegespannungen erzeugt, welche bei einer anschließend folgenden rechtsdrehenden Betätigung der Spannschraube wieder abgebaut werden und damit für den Radialhub der Spannkörper einerseits und die Verspannung des Werkzeugs mit der Werkzeugaufnahme andererseits positiv genutzt werden können.

Selbst im Fall einer Spanneinrichtung, bei der die Spannelemente durch ein Gelenk miteinander verbunden sind, können durch eine entsprechende Gestaltung der das Gelenk bildenden Fußabschnitte Biegesspannungen erzeugt werden.

Da die Spannelemente an ihren Fußabschnitten miteinander in Verbindung stehen und somit ohnehin bei einer rechtsdrehenden Betätigung der Spannschraube gegensinnig radial nach außen bewegt werden, ist es jedoch nicht unbedingt erforderlich, daß der Radialhub der Spannkörper durch Biegespannungen unterstützt wird, die vorher beim Zusammenklemmen der Spannelemente erzeugt wurden. Die Verspannung bzw. Aneinanderklammerung des Werkzeugs an die Werkzeugaufnahme kann selbstverständlich auch nur durch die infolge der Betätigung der Spannschraube 42 radial auf die Spannkörper 38 aufgebrachten Kraft erfolgen.

Im zusammengeklemmten Zustand der Spanngabel kann die Spanneinrichtung 39 in die Führungsausnehmung 31 des Aufnahmeabschnitts 32 der Werkzeugaufnahme 22 eingeführt werden, wie es aus Fig. 2 und Fig. 4 zu erkennen ist.

Anschließend werden die Spannkörper 38 durch eine rechtsdrehende Betätigung der Spannschraube 42 mittels des über die radialen Durchbrüche 64 und 66 des Werkzeugs 20 und der Werkzeugaufnahme 22 in die Ausnehmung 60 der Spannschraube 42 eingeführten Werkzeugs 63 radial nach außen bewegt, wodurch die beim Zusammenklemmen der Spannkörper 38 erzeugten Biegespannungen abgebaut werden. Gleichzeitig mit der Auseinanderbewegung der Spannkörper 38 oder der Spannelemente 40 greifen die Halteabschnitte 44 in die Ausnehmung 46 des Aufnahmeabschnitts 32 ein und bewirken damit eine axiale Fixierung der Spanneinrichtung 39 in der Führungsausnehmung 31 des Aufnahmeabschnitts 32 der Werkzeugaufnahme 22. Dieser Zustand geht aus der Darstellung in Fig. 1 und Fig. 3 hervor.

Nun kann die KSM-Abdrückvorrichtung 80 in die Werkzeugaufnahme 22 eingeführt und bezüglich ihrer Drehlage in der Weise positioniert werden, wie aus der Darstellung in Fig. 1 und Fig. 3 hervorgeht. Nach der richtigen Positionierung der KSM-Abdrückvorrichtung 80, bewirken die Rohre 84, 86, die sich durch die axialen Ausnehmungen des Fuß- bzw. Verbindungsabschnitts 41 erstrecken, eine Drehlagenfixierung der Spanneinrichtung 39 in der Führungsausnehmung 31 des Aufnahmeabschnitts 32 der Werkzeugaufnahme 22.

Anschließend werden die Spannkörper 38 durch eine linksdrehende Betätigung der Spannschraube 42 erneut zusammengeklemmt, bis sie an den Rohren 84, 86 anliegen, wie es in Fig. 2 und Fig. 4 gezeigt ist. Aus der Darstellung in Fig. 4 geht insbesondere hervor, daß der obere Spannkörper 38 bedingt durch das Anliegen an den Rohren 84, 86 in diesem Zustand nicht an den Ringabschnitt 54 der Spannschraube 42 anstößt. Dies hat zur Folge, daß die Halteabschnitte 44 nur noch teilweise mit der Ausnehmung 46 der Führungsausnehmung 31 des Aufnahmeabschnitts 32 der Werkzeugaufnahme 22 in Eingriff stehen. Dies reicht aus, um zu verhindern, daß die Spanneinrichtung 39 insbesondere in einer vertikalen Stellung der Werkzeugaufnahme 22 aus der Ausnehmung 31 herausfällt. Wie es aus Fig. 2 weiter ersichtlich ist, liegen die an die Spannkörper 38 anschließenden Abschnitte der Spannelemente 40 nicht mehr auf voller Traglänge an der Innenumfangswand der Ausnehmung 31 an. Dieser Zustand entspricht der Lösestellung des Spannsystems, in der das Werkzeug 20 gewechselt werden kann.

In der Lösestellung des Spannsystems liegen die Spannkörper 38 zudem an der Konusfläche 102 des Abdrückkolbens 82 der KSM-Abdrückvorrichtung 80 an, wie es in Fig. 2 zu sehen ist.

In der Lösestellung kann das Werkzeug 20 mit seinem Hohlschaft 28 in die entsprechende Ausnehmung 30 im Aufnahmeabschnitt 32 der Werkzeugaufnahme eingesteckt werden, wie es aus Fig. 2 ersichtlich ist. Das Werkzeug 20 stößt in der Lösestellung an den Abdrückkolben 82 an, der selbst wiederum an den Spannkörpern 38 anliegt. In der Lösestellung verbleibt zwischen den Radialringflächen 24, 26 des Werkzeugs 20 und der Werkzeugaufnahme 22 bedingt durch ein axiales Vorstehen des Abdrückkolbens 82 aus der Werkzeugaufnahme 22 in der Lösestellung des Spannsystems ein Planspalt im Bereich von 1/10 mm.

Nach dem Einstecken des Werkzeugs 20 in die entsprechende Ausnehmung 30 der Werkzeugaufnahme 22 wird die Betätigungsschraube 42 rechtsdrehend betätigt, was zu einer radialen Auseinanderbewegung der Spannkörper 38 führt. Mit zunehmender Drehbewegung der Spannschraube 42 kommen die an den Spannkörpern 38 vorgesehenen Keilflächen 36 in Eingriff mit der hinterschnittenen Spannschulter 34 des Hohlschafts 28 einerseits und die Stirnflächen der Spannkörper 38 synchron außer Eingriff mit der Konusfläche 102 des Abdrückkolbens 82. Eine weitere Drehbewegung der Spannschraube 42 führt demzufolge zu einer Klammerung des Werkzeugs 20 an die Werkzeugaufnahme 22, wobei die radial gerichtete Kraft auf die Spannkörper, die infolge der Drehbetätigung der Spannschraube und des Abbaus der beim Zusammenklemmen der Spannkörper 38 hervorgerufenen Biegespannung auf die Spannkörper 38 aufgebracht wird, über das Keilgetriebe zwischen den Keilflächen 34, 36 in eine axiale, zur Werkzeugaufnahme 22 gerichetete Kraft umgewandelt wird, die das Werkzeug 20 in die Ausnehmung der Werkzeugaufnahme 22 zieht. Gleichermaßen wird durch das Ziehen des Werkzeugs 20 in die Werkzeugaufnahme 22 der Abdrückkolben 82 in den Aufnahmeabschnitt 32 der Werkzeugaufnahme 22 gedrückt. Durch die konischen Passungsflächen am Hohlschaft 28 und in der entsprechenden Ausnehmung der Werkzeugaufnahme 22, wird eine eine geringfügige Aufweitung des Aufnahmeabschnitts 32 bewirkt, wodurch eine feste Verspannung zwischen Werkzeug 20 und Werkzeugaufnahme 22 entsteht. Gleichzeitig werden die Halteabschnitte 44 mit der entsprechenden Ausnehmung 46 vollständig in Eingriff gebracht, was mit zunehmender Spannkraft in den Bereichen der Spannelemente zwischen den Spannkörpern 38 und den Halteabschnitten zu einer Zugspannung führt. Die Spannstellung des erfindungsgemäßen Spannsystems ist in Fig. 1 und Fig. 3 gezeigt.

Während der Anklammerung des Werkzeugs 20 an die Werkzeugaufnahme 22 drückt das Werkzeug 20, wie vorstehend erwähnt, die KSM-Abdrückvorrichtung 80 in die Werkzeugaufnahme 22. Über Kanäle, die in dem den Hohlschaft 28 tragenden Werkzeug 20 und in der Werkzeugaufnahme ausgebildet sind, sowie über die Rohre 84, 86 werden Kühlund Schmiermittelzufuhrleitungen für die Zuführung von Kühl- und Schmiermittel zum Werkzeug geschaffen.

Der Wechsel des Werkzeugs 20 erfolgt im wesentlichen in der umgekehrten Reihenfolge. Der Ausgangszustand ist dabei die in Fig. 1 gezeigte Spannstellung. Durch eine linksdrehende Drehbetätigung der Spannschraube 42 bewegen sich die Spannkörper 38 aufeinander zu, wobei einerseits der Eingriff der Keilflächen 36 der Spannkörper 38 mit der hinterschnittenen Spannschulter 34 der Ausnehmung 30 des Aufnahmeabschnitts 32 aufgehoben wird und andererseits die Spannkörper 38 auf die Konusfläche 102 des Abdrückkolbens 82 auflaufen. Durch diese Vorgänge wird die Verspannung zwischen dem Werkzeug 20 und der Werkzeugaufnahme 22 mit zunehmender Drehbewegung der Spannschraube 42 abgebaut und gleichzeitig das Werkzeug 20 aus der Werkzeugaufnahme 22 gedrückt.

Zum Wechsel des Werkzeugs ist es natürlich nicht erforderlich, die Spanneinrichtung aus der Werkzeugaufnahme 22 auszubauen; vielmehr reicht es, das Spannsystem in die in Fig. 2 gezeigte Lösestellung zu bringen.

Bezüglich der zulässigen Spannnungen in den im Kraftfluß "Spannsystem-Werkzeug-Werkzeugaufnahme" befindlichen Bauteilen ergibt sich der günstige Umstand, daß die konstruktiv im Querschnitt begrenzten Spannelemente 40 der Spanngabel in der Spannstellung des Spannsystems reinen Zugspannungen unterliegen, während in der Lösestellung des Spannsystems Biegespannungen vorherrschen. Da die Belastbarkeit der Spannelemente eine Grenze für die realisierbare Spannkraft der Kupplung des Werkzeugs und der Werkzeugaufnahme darstellt, kann bei reiner Zugbelastung ein Höchstmaß an Spannkraft bei vorgegebenem Querschnitt der Spannelemente realisiert werden.

Der notwendige Radialhub der Spannkörper zum Wechseln der Werkzeuge sowie die mechanische Übersetzung der radial aufgebrachten Spannschraubenkraft in eine axial wirkende Spannkraft kann durch die Ausnutzung der elastischen Deformation der Spanngabel ohne zusätzliche bewegliche Verriegelungsteile im Spannsystem bewirkt werden. Die Reibung im Spannsystem wird dadurch auf ein Minimum herabgesetzt, wodurch sich eine deutliche Erhöhung der Spannkraft gegenüber herkömmlichen Spannsystemen ergibt.

Im Vergleich zu herkömmlichen Spannsystemen besteht das erfindungsgemäße Spannsystem im wesentlichen nur aus drei Bauteilen, nämlich der Spanngabel, der Spannschraube und der KSM-Abdrückvorrichtung. Die Lösestellung des erfindungsgemäßen Spannsystems ist zugleich dessen Montagestellung. Zusätzliche Bauteile und Montagevorrichtungen sind daher nicht notwendig.

Im vorstehend beschriebenen Ausführungsbeispiel weist die Spanngabel zwei Spannelemente mit je einem Spannkörper auf. Die vorliegende Erfindung ist jedoch nicht nur auf diese Gestaltungsweise beschränkt, sondern kann auch mit mehr als zwei Spannkörpern versehen sein.

Im vorstehend beschriebenen Ausführungsbeispiel ist die Spanngabel einstückig ausgeführt. Im Sinne der vorliegenden Erfindung wäre es jedoch auch vorstellbar, die Spanngabel aus zwei "halbschalenförmigen" Spannelementen aufzubauen, die an ihren Fußabschnitten über ein Gelenk, dessen Drehachse senkrecht zur Längs- bzw. Drehachse des Aufnahmeabschnitts liegt, beweglich miteinander zu verbinden. Gleichermaßen könnten die Spannelemente über eine entsprechende Gestaltung ihrer Fußabschnitte, die eine form- und/oder kraftschlüssige Verbindung ermöglicht, drehfest miteinander verbunden sein. Beispielsweise könnten die Fußabschnitte der Spannelemente als bezüglich der Drehachse des Aufnahmeabschnitts "halbkreisförmige" Abschnitte ausgeführt sein, die an der einander zugewandten Fügefläche je eine Keilverzahnung aufweisen, welche eine zuverlässige Aneinanderklammerung der beiden Spannelemente erlaubt.

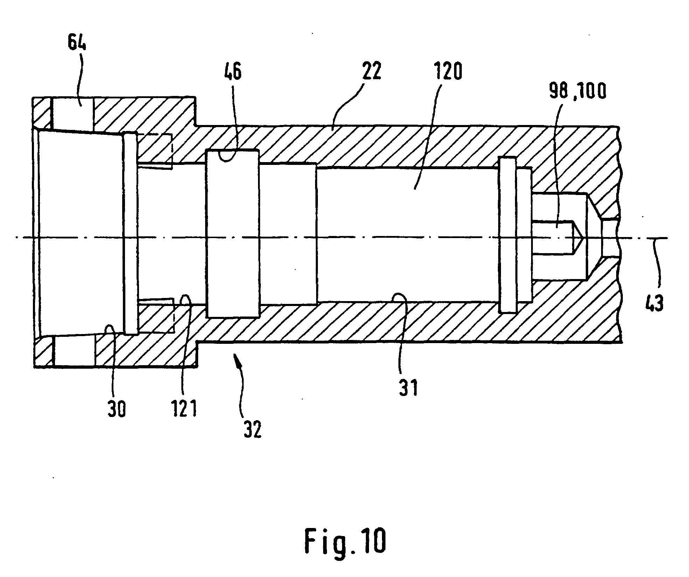

Fig. 10, Fig. 11, Fig. 12 und Fig. 13 zeigen ein zweites Ausführungsbeispiel der vorliegenden Erfindung. Dieses zweite Ausführungsbeispiel unterscheidet sich vom ersten Ausführungsbeispiel im wesentlichen nur in der axialen Fixierung der Spanneinrichtung 39 im Aufnahmeabschnitt. Im folgenden werden daher nur die Unterschiede erläutert, die sich gegenüber dem ersten Ausführungsbeispiel ergeben.

In Fig. 10 ist der Aufnahmeabschnitt 32 der Werkzeugaufnahme 22 im Längsschnitt dargestellt. Wie aus Fig. 10 hervorgeht, weist der Aufnahmeabschnitt 32 eine axiale, zentrische Ausnehmung 120 auf, die im wesentlichen aus der Ausnehmung 30 für den Hohlschaft 28, einer Ausnehmung 121 in der Form eines elliptischen Querschnitts sowie der zylindrischen Führungsausnehmung 31 besteht. In der Ausnehmung 121 von elliptischem Querschnitt ist die Ausnehmung 46 in der Form eines geschlossenen Ringquerschnitts zum Einhängen der Halteabschnitte 44 der Spannelemente 40 ausgebildet.

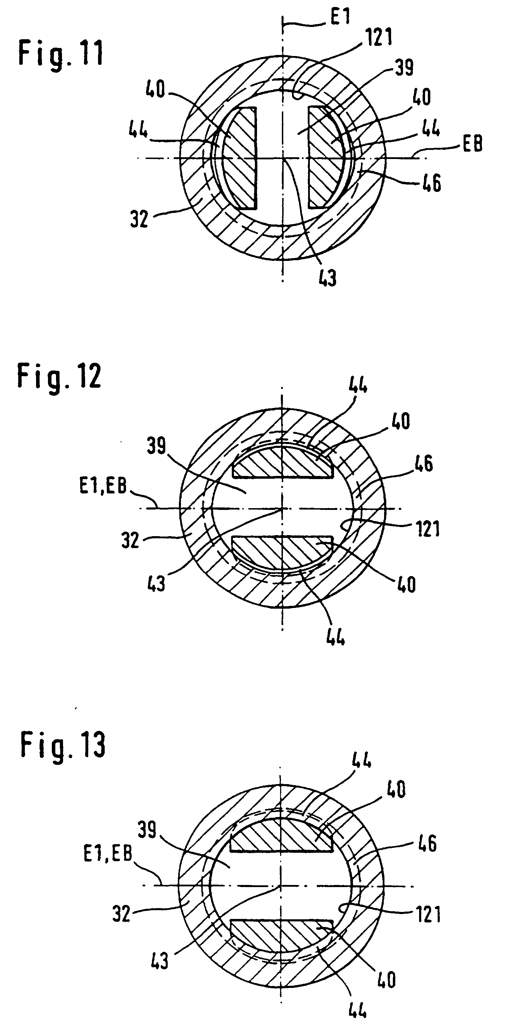

Die Ausnehmung 121 in der Form eines elliptischen Querschnitts ist insbesondere in Fig. 11, Fig. 12 und Fig. 13 zu sehen. Fig. 11 und Fig. 12 entsprechen im wesentlichen einem Querschnitt durch das in Fig. 2 gezeigte erfindungsgemäße Spannsystem im zusammengefügten Zustand, wobei die Spanneinrichtung 39 mit den Spannelementen 40 in verschiedenen Drehlagen gezeigt ist. Fig. 13 entspricht einem Querschnitt durch das in Fig. 1 gezeigte erfindungsgemäße Spannsystem im Spannzustand.

Anhand der Darstellungen in Fig. 11, Fig. 12 und Fig. 13 wird im folgenden der Einbau/Ausbau der Spanneinrichtung 39 in die/aus der Ausnehmung 120 des Aufnahmeabschnitts 32 der Werkzeugaufnahme 22 erläutert. Die Montage/Demontage des Werkzeugs an die/von der Werkzeugaufnahme erfolgt im wesentlichen in derselben Art und Weise wie im ersten Ausführungsbeispiel, so daß auf weitere Erläuterungen diesbezüglich verzichtet wird.

Der Einbau der Spanneinrichtung 39 beginnt zunächst mit dem Zusammenklemmen der Spanngabel, d. h. der Spannkörper 38 der Spannelemente 40. Dies erfolgt in derselben Art und Weise, wie es im Zusammenhang mit dem ersten Ausführungsbeispiel erläutert wurde.

Im zusammengeklemmten Zustand der Spanngabel kann die Spanneinrichtung 39 dann axial in die Ausnehmung 120 des Aufnahmeabschnitts 32 der Werkzeugaufnahme 22 eingeführt werden, wobei die Drehlage der Spanneinrichtung während des Einführens in die Ausnehmung 120 bezüglich der Werkzeugaufnahme 22 in Fig. 11 dargestellt ist. In dieser Drehlage steht die Ebene E1 senkrecht zu einer die Brennpunkte des elliptischen Querschnitts der Ausnehmung 121 verbindenden und die Längs- bzw. Drehachse 43 beinhaltenden Ebene EB. Die Spannelemente 40 der Spanneinrichtung 39 müssen demnach nur soweit radial zusammengeklemmt werden, daß die im wesentlichen zylindrische Spanneinrichtung 39 in die elliptische Ausnehmung 121 eingeführt werden kann.

Während im ersten Ausführungsbeispiel die Spannkörper 38 erst durch eine rechtsdrehende Betätigung der Spannschraube 42 radial nach außen bewegt werden, um die Spanneinrichtung 39 in der Ausnehmung 120 axial fixieren zu können, wird im zweiten Ausführungsbeispiel die Spanneinrichtung 39, nachdem sie vollständig in der Ausnehmung 121 eingesetzt ist, d. h. am Grund der Führungsausnehmung 31 anliegt, nur bezüglich der Werkzeugaufnahme 22 um 90° um die Drehachse 43 gedreht, so daß die Ebene E1 und die Ebene EB in einer gemeinsamen Ebene liegen. Dabei ist es gleichgültig in welche Richtung die Spanneinrichtung gedreht wird. Wie es in Fig. 12 gezeigt ist, hat eine derartige Drehung der Spanneinrichtung zur Folge, daß die Halteabschnitte 44 mit der hinterschnittenen Ausnehmung 46 in Eingriff gebracht werden und damit die Spanneinrichtung 39 im Aufnahmeabschnitt 32 der Werkzeugaufnahme 22 axial fixiert wird.

Nach dem Einsetzen des Werkzeugs in die Werkzeugaufnahme wird das Spannsystem durch eine rechtsdrehende Betätigung der Spannschraube 42 schließlich in den Spannzustand gebracht, wie es aus dem Fig. 1 dargestellten ersten Ausführungsbeispiel bekannt ist.

Der Ausbau der Spanneinrichtung 39 aus der Ausnehmung 121 der Werkzeugaufnahme 22 erfolgt natürlich in umgekehrter Reihenfolge.

Dieses zweite Ausführungsbeispiel unterscheidet sich vom ersten Ausführungsbeispiel demnach nur in dem Merkmale der axialen Fixierung der Spanneinrichtung in der Werkzeugaufnahme, was in diesem Fall im wesentlichen in der Art und Weise einer Bajonettverankerung erfolgt.

Die Figuren 14 bis 20 zeigen ein drittes Ausführungsbeispiel des erfindungsgemäßen Spannsystems. Das dritte Ausführungsbeispiel des erfindungsgemäßen Spannsystems unterscheidet sich vom ersten und zweiten Ausführungsbeispiel im wesentlichen nur in der Ausgestaltung der Spannelemente 40 der Spanngabel sowie der Spannschraube 42. Im folgenden werden daher nur die Unterschiede erläutert, die sich gegenüber dem ersten Ausführungsbeispiel ergeben.

Die Figuren 14 und 15 zeigen das erfindungsgemäße Spannsystem im Spannzustand. Die Figuren 16 und 17 zeigen das erfindungsgemäße Spannsystem im Lösezustand. In den Figuren 18 bis 20 ist die Spanngabel des erfindungsgemäßen Spannsystem in verschiedenen Ansichten dargestellt.

Wie es insbesondere aus den Figuren 18 und 19 ersichtlich ist, weisen die Spannelemente 40 jeweils auf Seiten ihrer einstückig verbundenen Fußabschnitte 41 zwei, beispielsweise eingefräste, Einkerbungen 130 und 132 normal zur Längs- oder Drehachse 43 der Werkzeugaufnahme 22 auf. Die Einkerbungen 130 und 132 schwächen den Querschnitt der Spannelemente 40 im Vergleich zu den Querschnitten der Spannelemente 40 im ersten und zweiten Ausführungsbeispiel. Im dritten Ausführungsbeispiel des erfindungsgemäßen Spannsystems fungiert insbesondere der Abschnitt 131 im Bereich der Einkerbungen 130 als ein "Materialgelenk", das mit dem Lösen des Spannsystems, d.h. mit dem Zusammenklemmen der beiden Spannelemente 40 bedingt durch eine Drehbetätigung der Spannschraube 42, elastisch verformt wird. Durch diese konstruktiv einfach zu realisierende Maßnahme ist im Vergleich zum ersten und zweiten Ausführungsbeispiel, in denen die Spannelemente 40 keine Einkerbungen aufweisen, eine geringere Kraft erforderlich, um die beiden Spannelemente 40 zusammenzuklemmen, d.h. um das Spannsystem in die in den Figuren 16 und 17 dargestellte Lösestellung zu bringen. Um im Spannsystem gemäß dem ersten und zweiten Ausführungsbeispiel die zum Zusammenklemmen der Spannelemente 40 erforderliche Kraft aufbringen zu können, müssen die Spannelemente 40 eine, in Axialrichtung betrachtet, bestimmte "Hebellänge" besitzen. Im dritten Ausführungsbeispiel ist infolge der Schwächung des Querschnitts der Spannelemente 40 durch die Einkerbungen 130 und 132 eine geringere Kraft erforderlich, um die Spannelemente 40 zusammenzuklemmen, d.h. um das Spannsystem in die in den Figuren 16 und 17 dargestellte Lösestellung zu bringen. Unter der Vorausetzung, daß im Spannsystem gemäß dem ersten, zweiten und dritten Ausführungsbeispiel mit einer Drehbetätigung der Spannschraube 42 auf die beiden Spannelemente 40 dieselbe Klemmkraft aufgebracht werden kann, erlauben die an den Spannelementen 40 des Spannsystems gemäß dem dritten Ausführungsbeispiel vorgesehenen Einkerbungen 130, 132 somit eine erhebliche Verkürzung der Spannelemente 40 und damit des Spannsystems insgesamt. Abgesehen von einer dadurch bedingten Material- und Gewichtseinsparung sowie den daraus resultierenden geringeren Herstellkosten bewirkt diese konstruktiv einfach zu realisierende Maßnahme zudem in einer einfacheren Montage.

In den Einkerbungen 132 sind Stützsegmente 140 angeordnet, die in den Figuren 14 und 16 zu sehen sind. Die Stützsegmente 140 haben die Aufgabe, beim Spannen des Spannsystems, d.h. bei einer Auseinanderbewegung der Spannelemente 40, ein "Umknicken" der Spannelemente 40 infolge eines in Bezug auf die Figuren 14 und 16 im Uhrzeigersinn orientierten Drehmoments zu verhindern. In der in Figur 16 gezeigten Lösestellung des Spannsystems sitzen diese, vorzugsweise aus Aluminium oder einem anderen Metall hergestellten, Stützsegmente frei beweglich in den Einkerbungen 132. In der in Figur 16 gezeigten Spannstellung des Spannsystems sind diese Stützsegmente 140 zwischen den die Einkerbungen 132 begrenzenden Flankenflächen eingeklemmt und bewirken eine Versteifung der Spannelemente 40, damit jene nicht um den Innenumfangswandabschnitt der Führungsausnehmung 31 des Aufnahmeabschnitts 32 zwischen der hinterschnittenen Ausnehmung 46 und der Ausnehmung 30 des Aufnahmeabschnitts 32 als fiktiven Drehpunkt "nach hinten" umknicken können.

Ein weiterer Unterschied des Spannsystems gemäß dem dritten Ausführungsbeispiel gegenüber dem Spannsystem gemäß dem ersten und zweiten Ausführungsbeispiel ist in der Ausgestaltung der Spannschraube 42 zu erkennen. Während im ersten und zweiten Ausführungsbeispiel die Spannschraube 42 mit dem Kopfabschnitt 52 und dem Gewindeabschnitt 56 einstückig realisiert ist, ist die Spannschraube 42 gemäß dem dritten Ausführungsbeispiel zweiteilig ausgestaltet. Aus den Figuren 14 bis 17 geht hervor, daß die Spannschraube 42 einen Gewindeabschnitt 56 mit einem Linksgewindeabschnitt 56b und einem Rechtsgewindeabschnitt 56a aufweist, von denen einer in der Gewindebohrung 62 des in den Figuren 14 bis 17 oberen Spannkörpers 38 und der andere in einer als Kopfabschnitt 52 fungierenden Mutter angeordnet ist, die in der Ausnehmung 57 des unteren Spannkörpers 38 angeordnet ist. Der Vorteil dieser Ausgestaltung ist, daß bedingt durch das Links/Rechtsgewinde der Spannschraube 42 relativ kleine Drehbewegungen erforderlich sind, um einen relativ großen "Hub" der Spannkörper 38 zu bewirken; des weiteren wird die als Kopfabschnitt 52 fungierende Mutter im wesentlichen nur auf Zug beansprucht, so daß weder die Mutter noch der entsprechende Spannkörper 38 einen starken reibungsbedingten Verschleiß erfahren. Weitere Feinheiten dieser Spannschraube 42 gemäß dem dritten Ausführungsbeispiel ergeben sich aus den Figuren 14 bis 17.

Die Montage/Demontage des Werkzeugs an die/von der Werkzeugaufnahme sowie die Wirkungsweise des Spannsystems gemäß dem dritten Ausführungsbeispiel erfolgt prinzipiell in derselben Art und Weise wie bei den Spannsystemen gemäß dem ersten und zweiten Ausführungsbeispiel, so daß eine nähere Erläuterung an dieser Stelle entfällt.

Die spezifischen Merkmale des ersten, zweiten und dritten Ausführungsbeispiels sind natürlich, sofern dies technisch möglich ist und zweckmäßig erscheint, beliebig miteinander kombinierbar oder untereinander austauschbar.

Die vorliegende Erfindung schafft somit ein Spannsystem zur lösbaren Verbindung zweier vorzugsweise rotationssymmetrischer Teile, von denen ein Teil einen vorzugsweise zylindrischen oder konischen Hohlschaft und das andere Teil einen entsprechenden Aufnahmeabschnitt zur passungsgenauen Aufnahme des Hohlschafts aufweist. Das Spannsystem weist eine konzentrisch im Aufnahmeabschnitt angeordnete Spanneinrichtung auf, die sich im aneinandergefügten Zustand der beiden Teile in den Hohlschaft des einen Teils erstreckt und zumindest zwei gegensinnig bewegbare Spannkörper sowie eine die Spannkörper antreibende Betätigungseinrichtung aufweist. Die Spannkörper können in und außer Eingriff mit einer hinterschnittenen Spannschulter des Hohlschafts gebracht werden, wodurch zwischen Planflächen der beiden zu verbindenden Teile eine Anpreßkraft erzeugt wird. Die Spannkörper sind als Kopfabschnitte von im wesentlichen parallel zur Längs- bzw. Drehachse des Aufnahmeabschnitts angeordneten, länglichen Spannelementen ausgeführt sind, deren Fußabschnitte miteinander verbunden sind.

## Patentansprüche

1. Spannsystem zur lösbaren Verbindung zweier vorzugsweise rotationssymmetrischer Teile (20; 22), von denen ein Teil (20) einen vorzugsweise zylindrischen oder konischen Hohlschaft (28) und das andere Teil (22) einen entsprechenden Aufnahmeabschnitt (32) zur passungsgenauen Aufnahme des Hohlschafts (28) aufweist, mit einer konzentrisch im Aufnahmeabschnitt (32) angeordneten Spanneinrichtung (39), die sich im aneinandergefügten Zustand der beiden Teile in den Hohlschaft (28) des einen Teils (20) erstreckt und zumindest zwei gegensinnig bewegbare Spannkörper (38) sowie eine die Spannkörper (38) antreibende Betätigungseinrichtung (42) aufweist, durch welche die Spannkörper (38) synchron in und außer Eingriff mit einer hinterschnittenen Spanüschulter (34) des Hohlschafts (28) bewegbar sind, wodurch zwischen Planflächen (24; 26) der beiden zu verbindenden Teile (20; 22) eine Anpreßkraft erzeugt wird, wobei die Spannkörper (38) als Kopfabschnitte von im wesentlichen parallel zur Längs- bzw. Drehachse (43) des Aufnahmeabschnitts (32) angeordneten, länglichen Spannelementen (40) ausgeführt sind, deren Fußabschnitte (41) miteinander verbunden sind, **dadurch gekennzeichnet, daß**
die Spannelemente (40) in einem Breich zwischen Kopf- und Fußabschnitt jeweils mit einem Halteabschnitt (44) versehen sind, die mit einer hinterschnittenen Ausnehmung (46) des Aufnahmeabschnitts (32) in Eingriff bringbar sind.

2. Spannsystem nach Anspruch 1, **dadurch gekennzeichnet, daß** die Spannelemente (40) von den Schenkeln einer einstückig ausgebildeten, U-förmigen Spanngabel gebildet sind.

3. Spannsystem nach Anspruch 1, **dadurch gekennzeichnet, daß** die Fußabschnitte (41) der Spannelemente (40) über ein Gelenk miteinander verbunden sind, dessen Drehachse senkrecht zur Längs- bzw. Drehachse (43) des Aufnahmeabschnitts (32) angeordnet ist.

4. Spannsystem nach einem der Ansprüche 1 bis 3, **dadurch gekennzeichnet, daß** die Spanne]emente (40) in einem Bereich zwischen Kopf- und Fußabschnitt jeweils mit einem Halteabschnitt (44) versehen sind, die synchron mit dem Eingriff der Spannkörper (38) mit der hinterschnittenen Spannschulter (34) des Hohlschafts (28) in Eingriff mit einer hinterschnittenen Ausnehmung (46) des Aufnahmeabschnitts (32) bringbar sind.

5. Spannsystem nach Anspruch 4, **dadurch gekennzeichnet, daß** die hinterschnittene Ausnehmung (46) einen geschlossenen Ringquerschnitt hat.

6. Spannsystem nach einem der Ansprüche 1 bis 5, **dadurch gekennzeichnet, daß** die Spannkörper (38) jeweils mit einer Keilfläche (36) versehen sind, die mit einer an der hinterschnittenen Spannschulter (34) des Hohlschafts (28) vorgesehenen Gegenfläche zusammenwirkt.

7. Spannsystem nach Anspruch 6, **dadurch gekennzeichnet, daß** die hinterschnittene Spannschulter (34) Teil einer im Hohlschaft ausgebildeten Ausnehmung mit einem geschlossenen Ringquerschnitt ist.

8. Spannsystem nach einem der Ansprüche 1 bis 7, **dadurch gekennzeichnet, daß** die Spanneinrichtung (39) in einer entsprechenden Führungsausnehmung (31) des Aufnahmeabschnitts (32) angeordnet ist und am Grund der Führungsausnehmung (31) gegen eine Ringdichtung anliegt.

9. Spannsystem nach einem der Ansprüche 1 bis 8, **gekennzeichnet durch** eine von den Spannkörpern (38) beim Lösen des Eingriffs mit der hinterschnittenen Spannschulter (34) axial betätigbare Abdrückvorrichtung (80), die der Trennung der beiden zu verbindenden Teile (20; 22) dient.

10. Spannsystem nach Anspruch 9, **gekennzeichnet durch** einen Abdrückkolben (82) als Teil der Abdrückvorrichtung (80), der in einer zentrischen Ausnehmung (94) in dem den Hohlschaft (28) tragenden Teil (20) angeordnet und beim Lösen des Eingriffs der Spannkörper (38) mit der hinterschnittenen Spannschulter (34) mit zunehmender Kraft synchron gegen eine Stützfläche (104) in der Ausnehmung (94) drückbar ist, wodurch eine zentrisch wirkende, positive Kraft auf den den Hohlschaft tragenden Teil (20) aufgebracht wird.

11. Spannsystem nach Anspruch 10, **dadurch gekennzeichnet, daß** die Spannkörper (38) sich beim Lösen des Eingriffs mit der hinterschnittenen Spannschulter (34) des Hohlschafts (28) aufeinander zu bewegen und gleichzeitig auf eine am Abdrückkolben (82) ausgebildete Konusfläche (102) auflaufen.

12. Spannsystem nach einem der Ansprüche 9 bis 11, **dadurch gekennzeichnet, daß** in einer Umfangsout des Abdrückkolbens (82) eine Ringdichtung angeordnet ist, über die der Abdrückkolben an der Umfangewand der Ausnehmung (94) anliegt.

13. Spannsystem nach einem der Ansprüche 1 bis 12, **gekennzeichnet durch** ein Kühl- und Schmiermittelzufuhrsystem (82), bestehend aus einem Kanalabschnitt (98, 100), der in dem den Aufnahmeabschnitt (32) tragenden Teil (22) ausgebildet ist, einem Kanalabschnitt (90, 92), der in dem den Hohlschaft (28) tragenden Teil (20) ausgebildet ist, und zumindest einem die Spanneinrichtung (39) überbrückenden und deren Drehlagenfixierung bezüglich des Aufnahmeabschnitts (32) bewirkenden Leitungsabschnitt (84, 86).

14. Spannsystem nach Anspruch 13, **dadurch gekennzeichnet, daß** der Leitungsabschnitt (84, 86) ein zwischen den zu verbindenden Teilen angeordnetes Rohr umfaßt, dessen Hohlschaft-seitiges Ende form- und/oder kraftschlüssig, vorzugsweise abgedichtet verlötet, in einer entsprechenden Ausnehmung (90, 92) des Abdrückkolbens (82) aufgenommen ist, dessen Schaftabschnitt axial verschiebbar durch eine entsprechende Ausnehmung (94, 96) des Verbindungsabschnitts (41) der Spanneinrichtung (39) geführt ist, und dessen Aufnahmeabschnitt-seitiges Ende mit Passung in einer entsprechenden Ausnehmung (98, 100) in dem den Aufnahmeabschnitt (32) tragenden Teil (22) aufgenommen ist.

15. Spannsystem nach Anspruch 13 oder 14, **dadurch gekennzeichnet, daß** der Leitungsabschnitt (84, 86) in der Weise zwischen den Spannkörpern (38) positioniert ist, daß die Spannkörper (38) den Leitungsabschnitt (84, 86) in der Lösestellung des Spannsystems einklemmen.

16. Spannsystem nach einem der Ansprüche 1 bis 15, **dadurch gekennzeichnet, daß** die zu verbindenden Teile (20; 22) als rotationssymmetrische Teile und die Anpreßflächen der zu verbindenden Teile als Radialringflächen (24; 26) ausgeführt sind.

17. Spannsystem nach einem der Ansprüche 1 bis 16, **dadurch gekennzeichnet, daß** die Passungsflächen zwischen Hohlschaft (28) und Aufnahmeabschnitt (32) von Konusflächen gebildet sind.

18. Spannsystem nach einem der Ansprüche 1 bis 17, **dadurch gekennzeichnet, daß** der Aufnahmeabschnitt (32) und der Hohlschaft (28) jeweils einen quer zur Längs- bzw. Drehachse (43) verlaufenden radialen Durchbruch (64; 66), vorzugsweise eine radiale Bohrung, aufweisen, in den von außen ein Werkzeug (63), beispielsweise in Form eines Inbus-Schlüssels, zum Antrieb der Betätigungeeinrichtung (42) eingeführt werden kann.

19. Spannsystem nach Anspruch 18, **dadurch gekennzeichnet, daß** die Betätigungseinrichtung eine Spannschraube (42) mit einem in einer entsprechenden Ausnehmung (57) des einen Spannkörpers (38) angeordneten Kopfabschnitt (52) und einem in einer entsprechenden Gewindebohrung (62) des anderen Spannkörpers (38) angeordneten Gewindeabschnitt (56) ist.

20. Spannsystem nach einem der Ansprüche 1 bis 19, **dadurch gekennzeichnet, daß** die Spanneinrichtung (39) aus einem zylindrischen Teil gefertigt ist, so daß die Spannelemente (40) und die Spannkörper (38) eine kreisbogenförmige Außenfläche aufweisen und der Verbindungsabschnitt (41) eine zylindrische Außenfläche besitzt.

21. Spannsystem nach einem der Ansprüche 1 bis 20, **dadurch gekennzeichnet, daß** die an die Spannkörper (38) anschließenden Abschnitte der Spannelemente (40) im Spannzustand des Spannsystems an der Innenumfangswand der Führungsausnehmung (31) des Aufnahmeabschnitts (32) anliegen.

22. Spannsystem nach Anspruch 19, **dadurch gekennzeichnet, daß** der Gewindeabschnitt (56) der Spannschraube (42) einen Linksgewindeabschnitt (56b) und einen Rechtsgewindeabschnitt (56a) aufweist, von denen einer (56a) in der Gewindebohrung (62) des anderen Spannkörpers (38) angeordnet ist, und an der andere (56b) in einer als Kopfabschnitt (52) fungierenden Mutter angeordnet ist, die in der Ausnehmung (57) des einen Spannkörpers (38) angeordnet ist.

23. Spannsystem nach einem der Ansprüche 1 bis 22, **dadurch gekennzeichnet**, daä die Spannelemente (40) auf Seiten ihrer Fußabschnitte (41) jeweils mit wenigstens einer den Querschnitt schwächenden Einkerbung (130, 132) versehen sind.

## Claims

1. A clamping system for detachably connecting two parts (20; 22), which preferably are rotationally symmetric, of which one part (20) has a preferably cylindrical or tapered hollow shank (28) and the other part (22) has a corresponding holding portion (32) for holding the hollow shank (28) in accurately fitting relationship, with a clamping device (39), which is disposed concentrically in the holding portion (32) and which, in the joined-together condition of the two parts, extends into the hollow shank (28) of the one part (20) and is provided with at least two clamping members (38) which can move in opposite directions as well as with an actuating device (42) for driving the clamping members (38), by means of which device the clamping members (38) can be synchronously moved into and out of engagement with an undercut clamping shoulder (34) of the hollow shank (28), whereby a pressing force is generated between plane faces (24; 26) of the two parts (20; 22) to be connected, wherein the clamping members (38) are constructed as head portions of elongated clamping elements (40), which are disposed substantially parallel to the longitudinal or rotational axis (43) of the holding portion (32) and the foot portions (41) of which are connected to one another, **characterized in that**
the clamping elements (40) are each provided in a region between head and foot portions with a retaining portion (44) which can be brought into engagement with an undercut recess (46) of the holding portion (32).

2. A clamping system according to claim 1, **characterized in that** the clamping elements (40) have the form of legs of a U-shaped clamping fork of one-piece structure.

3. A clamping system according to claim 1, **characterized in that** the foot portions (41) of the clamping elements (40) are connected to one another by an articulated joint, the axis of rotation of which is disposed perpendicular to the longitudinal or rotational axis (43) of the holding portion (32).

4. A clamping system according to one of claims 1 to 3, **characterized in that** the clamping elements (40) are each provided in a region between head and foot portions with a retaining portion (44), which can be brought synchronously with the engagement of the clamping members (38) with the undercut clamping shoulder (34) of the hollow shank (28) into engagement with an undercut recess (46) of the holding portion (32).

5. A clamping system according to claim 4, **characterized in that** the undercut recess (46) has a closed annular cross section.

6. A clamping system according to one of claims 1 to 5, **characterized in that** the clamping members (38) are each provided with a wedge face (36), which cooperates with a mating face provided on the undercut clamping shoulder (34) of the hollow shank (28).

7. A clamping system according to claim 6, **characterized in that** the undercut clamping shoulder (34) is part of a recess formed with a closed annular cross section in the hollow shank.

8. A clamping system according to one of claims 1 to 7, **characterized in that** the clamping device (39) is disposed in a corresponding guide recess (31) of the holding portion (32) and at the bottom of the guide recess (31) bears against an annular seal.

9. A clamping system according to one of claims 1 to 8, **characterized by** a push-off attachment (80), which can be actuated axially by the clamping members (38) upon detachment of the engagement with the undercut clamping shoulder (34), and which is used for separation of the two parts (20; 22) to be connected.

10. A clamping system according to claim 9, **characterized by** a push-off piston (82) as part of the push-off attachment (80), which piston is disposed in a central recess (94) in the part (20) supporting the hollow shank (28) and which, when the engagement of the clamping members (38) with the undercut clamping shoulder (34) is detached, can be pressed synchronously with increasing force against a bracing face (104) in the recess (94), whereby a centrally acting, positive force is applied on the part (20) supporting the hollow shank.

11. A clamping system according to claim 10, **characterized in that**, upon detachment of the engagement with the undercut clamping shoulder (34) of the hollow shank (28), the clamping members (38) move toward one another and simultaneously travel over a tapered face (102) formed on the push-off piston (82).

12. A clamping system according to one of claims 9 to 11, **characterized in that** there is disposed in a circumferential groove of the push-off piston (82) a sealing ring, via which the push-off piston bears against the circumferential wall of the recess,(94).

13. A clamping system according to one of claims 1 to 12, **characterized by** a coolant and lubricant supply system (82), which comprises a channel portion (98, 100) formed in the part (22) supporting the holding portion (32), a channel portion (90, 92) formed in the part (20) supporting the hollow shank (28), and at least one line portion (84, 86) bridging the clamping device (39) and ensuring fixation of the angular orientation thereof relative to the holding portion (32).

14. A clamping system according to claim 13, **characterized in that** the line portion (84, 86) comprises a tube disposed between the parts to be connected, the end of this tube on the hollow-shaft side being held interlockingly and/or frictionally, preferably by sealed brazed joint, in a corresponding recess (90, 92) of the push-off piston (82), the shank portion of this tube being guided in axially movable relationship through a corresponding recess (94, 96) of the connecting portion (41) of the clamping device (39), and the end of this tube on the holding-portion side being held in close-fitting relationship in a corresponding recess (98, 100) in the part (22) supporting the holding portion (32).

15. A clamping system according to claim 13 or 14, **characterized in that** the line portion (84, 86) is positioned between the clamping members (38) in such a way that the clamping members (38) pinch the line portion (84, 86) when the clamping system is in detached position.

16. A clamping system according to one of claims 1 to 15, **characterized in that** the parts (20; 22) to be, connected are designed as rotationally symmetric parts and the pressing faces of the parts to be connected are designed as radial annular faces (24; 26).

17. A clamping system according to one of claims 1 to 16, **characterized in that** the close-fitting faces between hollow shank (28) and holding portion (32) have the form of tapered faces.

18. A clamping system according to one of claims 1 to 17, **characterized in that** the holding portion (32) and the hollow shank (28) are each provided with a radial opening (64; 66) oriented perpendicular to the longitudinal or rotational axis (43), preferably a radial bore, into which a tool (63), in the form, for example, of an Allen key, can be introduced from outside to drive the actuating device (42).

19. A clamping system according to claim 18, **characterized in that** the actuating device is a tightening screw (42) with a head portion (52) disposed in a corresponding recess (57) of the one clamping member (38) and a threaded portion (56) disposed in a corresponding threaded bore (62) of the other clamping member (38).

20. A clamping system according to one of claims 1 to 19, **characterized in that** the clamping device (39) is made from a cylindrical part, so that the clamping elements (40) and the clamping members (38) have an arcuate outside face and the connecting portion (41) has a cylindrical outside face.

21. A clamping system according to one of claims 1 to 20, **characterized in that**, when the clamping system is in clamped condition, the portions of the clamping elements (40) adjoining the clamping members (38) bear against the inside circumferential wall of the guide recess (31) of the holding portion (32).

22. A clamping system according to claim 19, **characterized in that** the threaded portion (56) of the tightening screw (42) has a left-hand threaded portion (56b) and a right-hand threaded portion (56a), of which one (56a) is disposed in the threaded bore (62) of the other clamping member (38) and the other (56b) is disposed in a nut functioning as the head portion (52), the nut being disposed in the recess (57) of the one clamping member (38).

23. A clamping system according to one of claims 1 to 22, **characterized in that** the clamping elements (40) are each provided on the side of their foot portions (41) with at least one notch (130, 132) which reduces the cross section.

## Revendications

1. Système de serrage pour assemblage amovible de deux pièces de préférence à symétrie de révolution (20 ; 22), dont l'une (20) présente une tige de rivet de préférence cylindrique ou conique (28) et l'autre (22) un bloc de positionnement (32) correspondant exactement à la tige de rivet (28), comprenant un dispositif de serrage (39) agencé de façon concentrique dans le bloc de positionnement (32), lequel dispositif s'étend dans la tige de rivet (28) de l'une des pièces (20) lorsque les deux pièces sont bout à bout, et au moins deux corps de serrage (38) se déplaçant en sens inverse ainsi qu'un système de commande (42) actionnant les corps de serrage (38), permettant de mettre de façon synchronisée les corps de serrage (38) en prise ou hors prise avec un épaulement de serrage (34) contre-dépouillé de la tige de rivet (28), ce qui produit une force de pression entre les surfaces planes (24 ; 26) des deux pièces à assembler (20 ; 22), les corps de serrage (38) sont construits comme des extrémités supérieures des éléments de serrage (40) oblongs et agencés essentiellement parallèlement à l'axe longitudinal et/ou rotatif du bloc de positionnement (32), dont les extrémités inférieures sont reliées entre elles, **caractérisé en ce que** chaque élément de serrage(40) situé entre les extrémités supérieures et inférieures est doté d'une pièce d'arrêt (44), laquelle peut être engrenée dans un creux contre-dépouille (46) du bloc de positionnement.

2. Système de serrage selon la revendication 1, **caractérisé en ce que** les éléments de serrage (40) sont constitués par les côtés latéraux d'une fourche de serrage en U composée d'un seul morceau.

3. Système de serrage selon la revendication 1, **caractérisé en ce que** les extrémités inférieures (41) des éléments de serrage (40) sont assemblées par une articulation, dont l'axe de rotation est agencé verticalement à l'axe longitudinal et/ou de rotation (43) du bloc de positionnement (32).

4. Système de serrage selon l'une des revendications 1 à 3, **caractérisé en ce que** chaque élément de serrage (40) situé dans une zone entre les extrémités supérieures et inférieures est doté d'une pièce d'arrêt (44), laquelle peut être mise en prise avec le creux contre-dépouillé (46) du bloc de positionnement (32) de façon synchronisée avec l'engrenage du corps de serrage (38) avec l'épaulement de serrage contre-dépouillé (34) de la tige de rivet (28).

5. Système de serrage selon la revendication 4, **caractérisé en ce que** le creux contre-dépouillé (46) comprend une section annulaire fermée.

6. Système de serrage selon l'une des revendications 1 à 5, **caractérisé en ce que** les corps de serrage (38) sont chacun dotés d'une surface cunéiforme (36), laquelle concourt avec une surface antagoniste agencée sur l'épaulement contre dépouillé (34) de la tige de rivet (28).

7. Système de serrage selon la revendication 6, **caractérisé en ce que** l'épaulement de serrage contre-dépouillé (34) fait partie d'un creux formé dans la tige de rivet et doté d'une section annulaire fermée.

8. Système de serrage selon l'une des revendications 1 à 7, **caractérisé en ce que** le dispositif de serrage (39) est agencé dans un creux de guidage (31) correspondant du bloc de positionnement (32) et est adjacent à une garniture d'étanchéité annulaire au fond du creux de guidage (31).

9. Système de serrage selon l'une des revendications 1 à 8, **caractérisé par** un appareil de pression (80) pouvant être déplacé dans le sens de son axe par les corps de serrages (38) lors du relâchement de la prise avec l'épaulement de serrage contre-dépouillé (34), lequel appareil sert à la séparation des deux pièces à assembler (20 ; 22).

10. Système de serrage selon la revendication 9, **caractérisé par** un piston de pression (82) faisant partie de l'appareil de pression (80), lequel piston est agencé dans un creux centré (94) dans la partie (20) soutenant la tige de rivet (28) et lequel piston peut être appuyé avec une force croissante et de façon synchrone contre une surface d'appui (104) du creux (94) lors du relâchement de l'engrènement des corps de serrage (38) avec l'épaulement de serrage contre-dépouille (34), ce qui permet d'exercer une pression positive centrale sur la partie (20) portant la tige de rivet (28).

11. Système de serrage selon la revendication 10, **caractérisé en ce que** les corps de serrage (38) se déplacent l'un vers l'autre lors du relâchement de l'engrènemen avec l'épaulement de serrage contre-dépouille (34) de la tige de rivet (28) et simultanément butent sur une surface conique (102) formée sur le piston de pression (82).

12. Système de serrage selon l'une des revendications 9 à 11, **caractérisé en ce qu'**une garniture d'étanchéité annulaire est située dans une sortie périphérique du piston de pression (82), garniture par laquelle le piston de pression est adjacent à la paroi périphérique du creux (94).

13. Système de serrage selon l'une des revendications 1 à 12, **caractérisé par** un système de refroidissement et d'alimentation en lubrifiant (82), composé d'un segment de canal (98, 100) formé dans la partie (22) soutenant le bloc de positionnement (32), d'un segment de canal (90, 92) formé dans la partie (20) soutenant la tige de rivet (28) et d'au moins un segment de conduit (84, 86) surmontant le dispositif de serrage (39) et permettant de fixer son coussinet de pivotement par rapport au bloc de positionnement (32).

14. Système de serrage selon la revendication 13, **caractérisé en ce que** le segment de conduit (84, 86) comprend un tube situé entre les parties à assembler, dont l'extrémité située du coté de la tige de rivet est brasée, de préférence de façon étanche, de façon mécanique et/ou sous l'influence d'une force, ce segment est placé dans un creux correspondant (90, 92) du piston de pression (82), dont la partie de tige peut être coulissée dans le sens de l'axe dans un creux correspondant (94, 96) de l'extrémité d'assemblage (41) du dispositif de serrage (39) et dont l'extrémité située du coté du bloc de positionnement est ajustée dans un creux correspondant (98, 100) à l'intérieur de la pièce (22) soutenant le bloc de positionnement (32).

15. Système de serrage selon la revendication 13 ou 14, **caractérisée en ce que** le segment de conduit (84, 86) est placé de telle manière entre les corps de serrage (38) que ces derniers serrent le segment de conduit (84, 86) lorsque le système de serrage est en position relâchée.

16. Système de serrage selon l'une des revendications 1 à 15, **caractérisé en ce que** les pièces à assembler (20 ; 22) sont conçues comme des pièces à symétrie de révolution et les surfaces de pression des pièces à assembler comme des surfaces annulaires (24 ; 26).

17. Système de serrage selon l'une des revendications 1 à 16, **caractérisé en ce que** les surfaces d'ajustement entre la tige de rivet (28) et le bloc de positionnement (32) sont formées de surfaces coniques.

18. Système de serrage selon l'une des revendications 1 à 17, **caractérisé en ce que** le bloc de positionnement (32) et la tige de rivet (28) présentent chacun une ouverture radiale (64 ; 66), de préférence un trou radial, s'étirant transversalement par rapport à l'axe longitudinal et/ou de rotation (43), dans lequel un outil (63) peut être introduit de l'extérieur, par exemple une clé à six pans creux, un afin d'actionner le dispositif de commande.

19. Système de serrage selon la revendication 18, **caractérisé en ce que** le dispositif de commande est une vis de serrage (42) dotée d'une extrémité supérieure (52) agencée dans un creux correspondant (57) d'un corps de serrage (38) et d'un filet (56) agencé dans un taraudage (62) correspondant de l'autre corps de serrage (38).

20. Système de serrage selon l'une des revendications 1 à 19, **caractérisé en ce que** le dispositif de serrage (39) est constitué d'une pièce cylindrique, de telle manière que les éléments de serrage (40) et les corps de serrage (38) présentent une face extérieure en arc de cercle et que l'extrémité d'assemblage (41) possède une face extérieure cylindrique.

21. Système de serrage selon l'une des revendications 1 à 20, **caractérisé, en ce que** les parties des éléments de serrage (40) adjacentes aux corps de serrage (38) sont elles-même adjacentes à la paroi de périphérie intérieure du creux de guidage (31) du bloc de positionnement (32) lorsque le système de serrage est en position de serrage.

22. Système de serrage selon la revendication 19, **caractérisé en ce que** la partie de taraudage (56) de la vis de serrage (42) présente une partie gauche de taraudage (56b) et une partie droite (56a).,dont l'une (56a) est placée dans le taraudage (62) de l'autre corps de serrage (38) et l'autre (56b) est située dans un écrou constituant une extrémité supérieure (52), lequel est agencé dans le creux (57) du corps de serrage (38).

23. Système de serrage selon l'une des revendications 1 à 22, **caractérisé en ce que** les éléments de serrage (40) sont chacun dotés, au niveau de leurs extrémités inférieures (41), d'au moins un creux affaiblissant la coupe transversale.
